# EUROPÄISCHE PATENTSCHRIFT

(11) **EP 3 049 252 B1**
(45) Veröffentlichungstag und Bekanntmachung des Hinweises auf die Patenterteilung: **07.03.2018**
(21) Anmeldenummer: 14772320.9
(22) Anmeldetag: 23.09.2014
(51) Int. Cl.: B41J 15/04, B41J 3/60, B41M 5/00, C09D 11/322, B41J 2/21, C09D 11/106

(54) **ROLLEN-TINTENSTRAHLDRUCKMASCHINE, DRUCKFARBE UND VERFAHREN ZUM BEDRUCKEN EINES BEDRUCKSTOFFES**
WEB-FED INKJET PRINTING PRESS, PRINTING INK AND METHOD FOR PRINTING A PRINTING MATERIAL
MACHINE D'IMPRESSION À JET D'ENCRE À ROULEAU, COULEUR D'IMPRESSION ET PROCÉDÉ D'IMPRESSION D'UNE MATIÈRE D'IMPRESSION

(30) Priorität: 25.09.2013 DE 102013219259; 20.12.2013 DE 102013226837
(43) Veröffentlichungstag der Anmeldung: 03.08.2016
(73) Patentinhaber: Koenig & Bauer AG, 97080 Würzburg (DE)
(72) Erfinder: BAAR, Oliver, Christian, 71088 Holzgerlingen (DE); EPPICH, Klaus, 97294 Unterpleichfeld (DE); MICHAEL, Sven, 67159 Friedelsheim (DE)
(74) Vertreter: Koenig & Bauer AG
(86) Internationale Anmeldenummer: PCT/EP2014/070173
(87) Internationale Veröffentlichungsnummer: WO 2015/044100

(56) Entgegenhaltungen:
- DE-A1-102011 076 899
- US-A1- 2008 055 385
- US-A1- 2011 061 826
- US-A1- 2011 128 338
- US-A1- 2012 154 498

## Beschreibung

Die Erfindung betrifft eine Rollen-Tintenstrahldruckmaschine und ein Verfahren zum Bedrucken eines Bedruckstoffes gemäß Anspruch 1 bzw. 12.

Es sind unterschiedliche Druckverfahren bekannt, die in Druckmaschinen zum Einsatz kommen können. Ein solches Druckverfahren ist der Tintenstrahldruck oder Ink-Jet-Druck. Dabei werden einzelne Druckfarbetropfen aus Düsen von Druckköpfen ausgestoßen und derart auf einen Bedruckstoff übertragen, dass sich auf dem Bedruckstoff ein Druckbild ergibt. Durch einzelne Ansteuerung einer Vielzahl von Düsen können so unterschiedliche Druckbilder geschaffen werden. Es gibt keine feste Druckform und somit ist es möglich, jedes einzelne Druckprodukt individuell zu gestalten. Dadurch können personalisierte Druckprodukte hergestellt werden und/oder auf Grund der Einsparung der Druckformen kleine Auflagen von Druckprodukten zu geringen Kosten hergestellt werden.

Eine exakte Übereinstimmung eines Druckbildes auf Vorder- und Rückseite eines beidseitig bedruckten Bedruckstoffes nennt man Register (DIN 16500-2). Im Mehrfarbendruck spricht man vom Passer (DIN 16500-2), wenn einzelne Druckbilder verschiedener Farben exakt passend zu einem Bild zusammengefügt werden. Auch im Zusammenhang mit dem Tintenstrahldruck sind geeignete Maßnahmen zu treffen, um Passer und/oder Register einzuhalten.

Die DE 10 2006 004 341 A1 offenbart eine Vorbehandlung und/oder Vorbeschichtung von nicht saugfähigen Substraten zum Bedrucken mit einem Tintenstrahldrucker mittels einer polymerisierbaren, acrylathaltigen Tinte, wobei Tinte des Tintenstrahldruck auf die Beschichtung zeit- oder raumabhängig vor dem Aufbringen der Tinte (inline) auf das Substrat aufgebracht wird oder die Tinte zeitlich unabhängig von dem Aufbringen der Beschichtung auf das Substrat aufgebracht wird, wobei ggf. mit einer Temperiereinrichtung die auf das Substrat bzw. die Beschichtung aufgebrachte Tinte wärmebehandelt werden kann.

Durch die EP 2 202 081 A1 und die JP 2003-063707 A ist jeweils eine Druckmaschine bekannt, wobei die Druckmaschine eine erste Druckeinheit und einen Trockner aufweist, wobei die erste Druckeinheit einen Zentralzylinder mit einem eigenen, dem ersten Zentralzylinder zugeordneten Antriebsmotor und zumindest einen Tintenstrahldruckkopf aufweist.

Durch die US 5 566 616 A ist eine Druckmaschine bekannt, die einen rotierbaren Zentralzylinder, Tintenstrahldruckköpfe, eine Kühleinrichtung und einen Trockner aufweist, der wahlweise mit Temperatur und Luftzug oder mit strahlungsinduzierter Vernetzung arbeitet.

Durch die US 6 053 107 A ist eine Druckmaschine bekannt, die einen angetriebenen Zentralzylinder sowie einen Trockner mit Kühleinrichtung aufweist.

Durch die DE 10 2011 076 899 A1 ist eine Druckmaschine bekannt, die zumindest eine Druckeinheit und zumindest einen als Tintenstrahldruckkopf ausgebildeten Druckkopf aufweist.

Durch die WO 2013/132439 A1 ist eine Druckfarbe für ein Inkjet-Druckverfahren bekannt. Um den Problemen, die sich beim indirekten Inkjetdruck bei der Farbauftragung auf das z. B. silikonhaltige Übertragungsband ergeben entgegenzutreten, umfasst die Druckfarbe u. a. ein organisches Polymer. Es werden eine Vielzahl von Tintenzusammensetzungen und Bereichen für die Zusammensetzung offenbart, worunter unter anderem wasserbasierte Tinten mit Polymeren und Pigmenten umfasst sind. In nicht näher bezeichneten Ausführungen können Tinten Pigmente mit einer maximalen Größe von 120 µm aufweisen

Ein von der Internetseite *http:*//*www.verband-druck-bw.de* des Verbandes Druck und Medien (VDM) abrufbarer Vortrag von Herrn Oliver Baar, der laut Angabe auf der Seite des VDM im Rahmen des Druckforum 2013 am 01.02.2013 in Filderstadt veröffentlicht worden sei, ist eine Rollen-Druckmaschine mit einer Inkjet-Druckeinheit sowie als Tintensystem eine wasserbasierende Pigment-Polymer-Tinte offenbart

Ein anderer von der Internetseite *http:llwww.verband-druck-bw.de* des Verbandes Druck und Medien (VDM) abrufbarer Vortrag von Herrn Klaus Eppich, der laut Angabe auf der Seite des VDM im Rahmen des Druckforum 2013 am 01.02.2013 in Filderstadt veröffentlicht worden sei, werden unterschiedlichste Anwendungsmöglichkeiten für die Druckmaschine KBA RotaJET genannt und hinsichtlich ihrer Relevanz bewertet.

Die DE 20 2009 003 960 U1 offenbart eine Kühlanlage zum Kühlen einer gestrichenen oder ungestrichenen Faserbahn. Besonders bei Feinpapier und bei Karton sei eine effektive Kühllösung erforderlich, um die Bahn vor dem Aufrollen abzukühlen.

Durch einen Artikel "Rauigkeit und Topographie - ein Vergleich unterschiedlicher Messverfahren" von M. Lechthaler und W. Bauer im "Wochenblatt für Papierfabrikation", 21 - 2006, sind unterschiedliche Messverfahren zur Bestimmung der Rauigkeit und Topografie von Papier offenbart und miteinander verglichen.

In der DE 600 29 410 T2 werden Tintenstrahltinten mit einer offenbart, welche u. a. polymere Bindemittel sowie Färbemittel, z. B. wasserlösliche Farbstoffe oder unlösliche Pigmente, enthalten

Durch die US 2008/0055385 A1 ist eine wasserhaltige Tinte bekannt, welche einen Polymeranteil und als Färbemitte Pigmente umfasst. Durch Inkjetköpfe wird ein zuvor mit einem Fluid beaufschlagtes Übertragungsmittel mit der Tinte bedruckt, von welchem das Druckbild im indirekten Verfahren an den Bedruckstoff abgegeben wird. Als Bedruckstoff kann normales Papier mit beispielsweise einer erheblichen Rauigkeit oder ein beschichtetes glattes Papier sein.

Die US 2011/0128338 A1 betrifft ein modulares Transportsystem für den Transport eines Bedruckstoffes durch eine Inkjet-Druckmaschine. Die Druckmaschine umfasst zwei Module mit je einem oder mehreren auf den bahnförmigen Bedruckstoff gerichteten Druckköpfen. Das Transportsystem sei geeignet für Druckprozesse, bei welchen der Bedruckstoffe durch den Druck befeuchtet wird. Dies soll gar für Bedruckstoffe gelten, die besonders zu einem Wachsen in Längs- und Querrichtung neigen, wie beispielsweise für zellulosebasierte Bedruckstoffe beim Befeuchten durch wasserbasierte Tinte der Fall sei.

In der US 2011/0061826 A1 ist ein Mehrschichtenfaserprodukt mit z. B. einem Flächengewicht von 25 bis 100 g/m2 und ein Verfahren zu dessen Herstellung offenbart, wobei das Verfahren ein Anbringen einer Faserschicht welche einen Füllstoff enthält und welche eine Oberflächenschicht des Faserproduktes bildet, an beide Seiten einer Mittelschicht bestehend aus mindestens einer Faserschicht umfasst. Dabei wird Füllstoff und Zusatzmittel zum in den Oberflächenschichten des Mehrschichtenproduktes verwendeten Halbstoff hinzugefügt. Der Füllstoff der Oberflächenschichten besteht dabei mindestens teilweise aus Cellulose- oder Lignocellulose-Fibrillen, auf welche lichtstreuende Materialpartikel abgelagert wurden.

Der Erfindung liegt die Aufgabe zugrunde, eine Rollen-Tintenstrahldruckmaschine und ein Verfahren zum Bedrucken eines Bedruckstoffes zu schaffen.

Die Aufgabe wird erfindungsgemäß durch die Merkmale des Anspruches 1 bzw. 12 gelöst.

Einen herausragenden Vorteil stellt die Druckmaschine und/oder die Druckfarbe und/oder das Verfahren in Bezug auf die - vergleichsweise für den Inkjetdruck - kostengünstige und/oder besonders Vielfältige, und dennoch hohen Qualitätsansprüchen genügende Produktionsmöglichkeit insbesondere einer Druckmaschine dar, durch welche ein individualisiertes Erzeugen von Druckprodukten und/oder ein wirtschaftlicher Druck von Kleinstauflagen möglich ist.

Von besonderer Bedeutung ist eine Ausführung, in welcher ein erweitertes und/oder großes Spektrum an Bedruckstoffen, insbesondere in einer vorteilhaften Ausführung auch nicht- oder wenig saugfähige Bedruckstoffe und/oder Materialien im industrielles InkjetDruck bedruckbar sind.

In einer Ausführungsvariante, in welcher als Bedruckstoff ein z. B. holzhaltiges Papier mit einem Flächengewicht zwischen 35 bis 80 g/m² und/oder mit einer zu bedruckenden Oberfläche, welche nicht unbedingt extra behandelt und/oder geglättet sein muss, kann mit einem vergleichsweise günstigeren Papier, z. B. Zeitungs- und/oder Offsetpapier, z. B. einem ungestrichenem oder geringfügig oder leicht getrichenen, ansonsten jedoch nicht zusätzlich weiter obeflächenbehandeltem Papier, produziert werden. Es bedarf keiner teuren Spezialpapiere, wie es im Qualitätsinkjetdruck bislang erforderlich ist.

In einer Ausführung kann auf eine aus dem Stand der Technik bekannte Oberflächenveredelung oder eine Vorbehandlung mit einer Korona-Vorrichtung im Bedruckstoffweg der Druckmaschine zur Vorbehandlung der zu bedruckenden Bedruckstoffe verzichtet werden.

In einer vorteilhaften Ausführung ist eine Applikationseinrichtung zur Aufbringung von Energie oder einem Substrat vorgesehen, durch welche(s) ein Starten und/oder beschleunigen des Polymerisationsprozesses erreicht wird. Dadurch erfolgt auch für nicht eigens für den Inkjetdruck optimierte Bedruckstoffe ein lediglich geringfügiges Eindringen und/oder Verlaufen der Farbpigmente.

Durch eine besonders bevorzugte Ausführung der Druckfarbe mit einem Polymer kann ein Eindringen der Farbpigmente zusammen mit der wässrigen Phase in den Bedruckstoff hinein behindert werden. Dadurch gewinnt das Druckbild an Schärfe und Farbtiefe. Das Polymer kann vorteilhaft ein Styrol-Poymer, ein Halogen-Kohlenwasserstoff-Polymer, ein Vinylpolymer, ein fluoriertes Acrylpolymer, ein floriertes oder ein nichtfloriertes Methacryl-Polymer, ein Polyether-Mischporlymerisat oder deren Copolymere oder eine Mischung aus zwei oder mehreren der genannten Stoffe oder sein, ist jedoch bevorzugt als Acrylbasiertes Polymer oder Copolymer oder in alternativer Ausführung als Ethylen-Polymer, als Propylen-Polymer oder als Buten-Polymer ausgebildet. Die Druckfarbe ist vorzugsweise wässrig ausgebildet, was u. a. Vorteile im Hinblick auf die Umweltverträglichkeit und Abwasser- bzw. Abfallentsorgungskosten birgt.

Besonders vorteilhaft ist das Bedrucken eines o. g. Bedruckstoffes hinsichtlich der Kosten. Durch ein Bedrucken eines z. B. nicht inketoptimierten Papiers mit der polymerhaltigen wasserbasierten Druckfarbe wir eine hohe Qualität erreicht.

In einer hinsichtlich des Maschinenaufwandes vorteilhaften Ausführung der Druckmaschine kann diese im Direktverfahren arbeiten, wobei die Druckfarbe bzw. Tinte durch die Druckköpfe direkt auf das Substrat, d. h. den Bedruckstoff, aufgebracht wird. In einer ggf. etwas aufwändigeren, jedoch u. U. im Hinblick auf den Farbauftrag vorteilhaften Variante kann alternativ auch ein indirektes Verfahren unter Einsatz eines insbesondere als Übertragungszylinder ausgebildeten Übertragungsmittels, vorgesehen sein.

Ausführungsbeispiele der Erfindung sind in den Zeichnungen dargestellt und werden im Folgenden näher beschrieben.

Es zeigen:

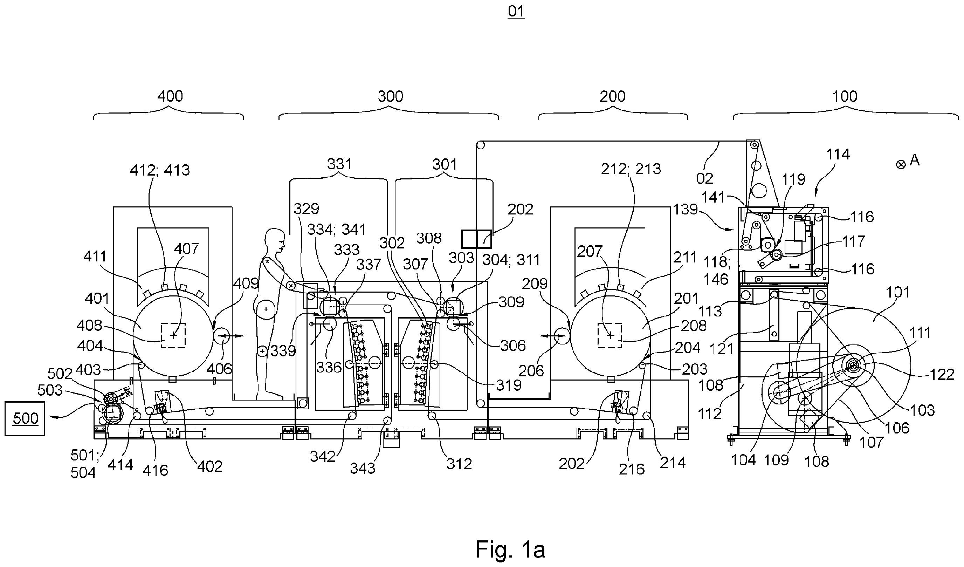

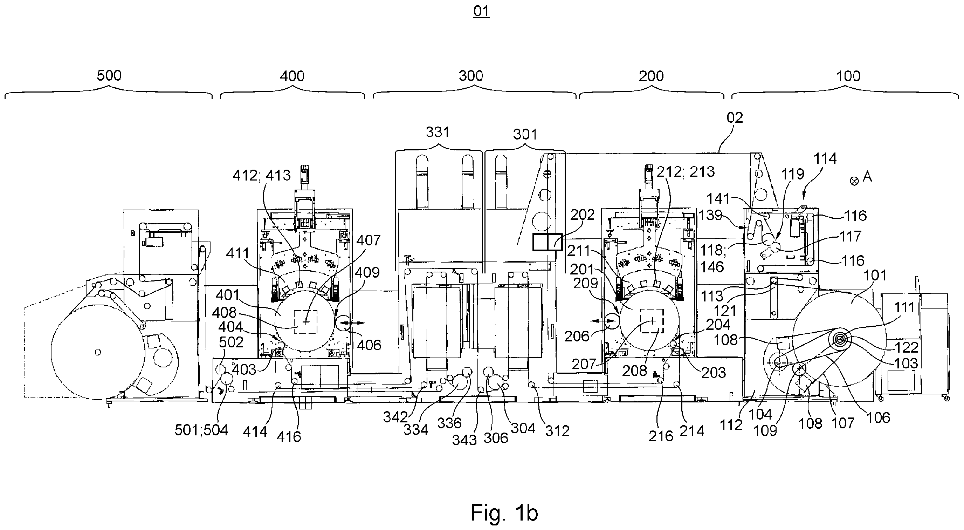

- Fig. 1: eine schematische Darstellung einer Druckmaschine mit a) einer ersten und b) einer alternativer Bahnführung;

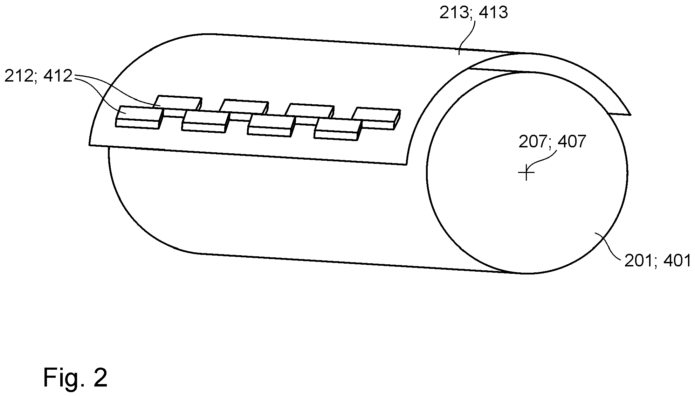

- Fig. 2: eine schematische Darstellung eines Teils einer Druckeinheit mit einer Doppelreihe von Druckköpfen, einer vorgeordneten und einer nachgeordneten Applikationseinrichtung sowie einem Luftschwert;
- Fig. 3: eine Prinzipskizze eines auf einen Bedruckstoff aufgebrachten Farbtropfens a) vor und b) nach dem Trocknen.

Eine Druckmaschine 01 weist zumindest eine Bedruckstoffquelle 100, zumindest eine erste Druckeinheit 200, bevorzugt zumindest ein die erstes Trocknung unterstützendes Mittel, d. h. erstes Trocknungshilfsmittel 301, z. B. einen ersten Trockner 301, bevorzugt zumindest eine zweite Druckeinheit 400 und bevorzugt zumindest ein zweites die Trocknung unterstützendes Mittel, d. h. Trocknungshilfsmittel 331, z. B. einen zweiten Trockner 331 und bevorzugt zumindest eine Nachbearbeitungsvorrichtung 500 auf. Die Druckmaschine 01 ist zudem bevorzugt als Tintenstrahldruckmaschine 01 ausgebildet. Bevorzugt ist die Druckmaschine 01 als Rollen-Druckmaschine 01 ausgebildet, weiter bevorzugt als Rollen-Tintenstrahldruckmaschine 01. Die Druckmaschine 01 ist beispielsweise als Druckmaschine 01 mit einem rotierenden, den Bedruckstoff 02 führenden Zylinder 201; 401, und für den Fall eins indirekten Tintenstrahldruckverfahrens zusätzlich mit z. B. einem ebenfalls rotierendem Übertragungszylinder oder einem umlaufenden Band als Übertragungsmittel, insbesondere als indirekte Rollen-Tintenstrahldruckmaschine 01, ausgebildet. Im hier dargestellter Ausführung ist die Druckmaschine 01 für den direkten Tintenstrahldruck, d. h. ohne Übertragungsmittel, ausgebildet. Im Fall einer Rollen-Druckmaschine 01 ist die Bedruckstoffquelle 100 als Rollenabspulvorrichtung 100 ausgebildet. Im Fall einer Bogendruckmaschine ist die Bedruckstoffquelle 100 als Bogenanleger ausgebildet. In der Bedruckstoffquelle 100 wird bevorzugt zumindest ein Bedruckstoff 02 ausgerichtet, bevorzugt bezüglich zumindest bezüglich einer Kante dieses Bedruckstoffs 02. In der Rollenabspulvorrichtung 100 einer Rollen-Druckmaschine 01 wird zumindest ein bahnförmiger Bedruckstoff 02, also eine Bedruckstoffbahn 02, vorzugsweise eine Papierbahn 02 von einer Bedruckstoffrolle 101 abgespult und bevorzugt bezüglich ihrer Kanten in einer axialen Richtung A ausgerichtet. Die axiale Richtung A ist bevorzugt eine Richtung A, die sich parallel zu einer Rotationsachse 111 einer Bedruckstoffrolle 101 und/oder zumindest eines Zentralzylinders 201; 401 erstreckt. Ein Transportweg des zumindest einen Bedruckstoffs 02 und insbesondere die Bedruckstoffbahn 02 verläuft im Anschluss an die zumindest eine Bedruckstoffquelle 100 bevorzugt durch die zumindest eine erste Druckeinheit 200, wo der Bedruckstoff 02 und insbesondere die Bedruckstoffbahn 02 bevorzugt mittels zumindest einer Druckfarbe zumindest einseitig und bevorzugt in Verbindung mit der zumindest einen zweiten Druckeinheit 400 bevorzugt zweiseitig mit einem Druckbild versehen wird.

Nach einem Passieren der zumindest einen ersten Druckeinheit 200 durchläuft der Transportweg des Bedruckstoffs 02 und insbesondere der Bedruckstoffbahn 02 bevorzugt den zumindest einen ersten Trockner 301, um die aufgetragene Druckfarbe zu trocknen. Unter Druckfarbe ist im Vorangegangenen und im Folgenden allgemein ein Beschichtungsmittel zu verstehen, insbesondere eine wie unten näher erläuterte, insbesondere polymerhaltige Druckfarbe. Bevorzugt ist der zumindest eine erste Trockner 301 Bestandteil einer Trocknereinheit 300. Nach dem Passieren des zumindest einen ersten Trockners 301 und bevorzugt der zumindest einen zweiten Druckeinheit 400 und/oder des zumindest einen zweiten Trockners 331 wird der Bedruckstoff 02 und insbesondere die Bedruckstoffbahn 02 bevorzugt der zumindest einen Nachbearbeitungsvorrichtung 500 zugeführt und dort weiter verarbeitet. Die zumindest eine Nachbearbeitungsvorrichtung 500 ist beispielsweise als zumindest eine Falzvorrichtung 500 und/oder als eine Aufwickelvorrichtung 500 und/oder als zumindest eine Planauslage 500 ausgebildet. In der zumindest einen Falzvorrichtung 500 wird der bevorzugt zweiseitig bedruckte Bedruckstoff 02 bevorzugt zu einzelnen Druckprodukten weiterverarbeitet.

Bevorzugt ist entlang des Transportwegs des Bedruckstoffs 02 und insbesondere der Bedruckstoffbahn 02 durch die Druckmaschine 01 nach der zumindest einen ersten Druckeinheit 200 bevorzugt zumindest der erste Trockner 301 und/oder nach dem zumindest einen ersten Trockner 301 bevorzugt zumindest die zweite Druckeinheit 400 und/oder nach der zumindest einen zweiten Druckeinheit 400 bevorzugt der zumindest eine zweite Trockner 331 und/oder nach dem zumindest einen zweiten Trockner 331 bevorzugt die zumindest eine Nachbearbeitungsvorrichtung 500 angeordnet. Dadurch ist sichergestellt, dass ein beidseitiger Bedruck des Bedruckstoffs 02 und insbesondere der Bedruckstoffbahn 02 in hoher Qualität ermöglicht wird.

In einer bevorzugten Ausführung der Druckmaschine 01 ist diese in zumindest einer Betriebssituation mit einer ein Bindemittel, insbesondere ein als Polymer ausgeführtes oder zumindest umfassendes Bindemittel, enthaltenden Druckfarbe betreibbar und/oder ist oder wird mit einer derartigen Druckfarbe betrieben, welche unten anhand besonders vorteilhafter Beispiele beschrieben ist, und/oder ist mit einer chemischen und/oder energetischen Vor- und/oder Nachbehandlung unter Anwendung einer z. B. hierzu ausgebildeten Applikationseinrichtung 217; 218; 417; 418 betreibbar und/oder ist oder wird mit einer derartigen Vor- und/oder Nachbehandlung bzw. Applikationseinrichtung 217; 218; 417; 418 betrieben, welche unten anhand besonders vorteilhafter Beispiele beschrieben ist. Eine derartige Applikationseinrichtung 217; 218; 417; 418 ist bevorzugt im Bedruckstoffweg stromaufwärts wenigstens eines Trocknungshilfsmittels 301; 331; 219; 419, z. B. eines Trockners 301 und/oder eines Luftschwertes 219; 419, vorgesehen.

Insbesondere ist und/oder wird in einer vorteilhaften Ausführung die bevorzugt mit einer spezifischen Druckfarbe und/oder einer derartigen Vor- und/oder Nachbehandlung betriebenen Druckmaschine 01 in zumindest einer Betriebssituation mit einem Bedruckstoff 02 betreibbar bzw. betrieben, welcher im Bereich der zu bedruckenden Oberfläche - zumindest bezogen auf Wasser und/oder eine überwiegend (> 50 %) wässrige Flüssigkeit oder Phase und/oder zumindest zum Zeitpunkt des Druckens - nicht- - oder zumindest nur geringfügig saugfähig und/oder hydrophob (siehe unten), beispielweise nicht hydrophil, und/oder z. B. mit einem Benetzungs- oder Kontaktwinkel für die überwiegend wässrige Druckfarbe beispielsweise kleiner 90°, insbesondere 45,0 °, oder bevorzugt kleiner 5,0 °0.

In einer anderen vorteilhaften Ausführung ist die bevorzugt mit einer spezifischen Druckfarbe und/oder einer derartigen Vor- und/oder Nachbehandlung betriebenen Druckmaschine 01 in zumindest einer Betriebssituation mit einem Bedruckstoff 02 in Art eines Zeitungspapiers betreibbar oder betrieben ist, welcher ebenfalls unten näher erläutert ist.

Die mit einer o. g. Druckfarbe und/oder einem o. g. Bedruckstoff 02 betriebene oder betreibbare Druckmaschine 01 ist in Art einer oben allgemein beschriebenen Tintenstrahldruckmaschine 01 ausgebildet. Diese kann in vorteilhaften Ausbildungen durch eines oder mehrere Merkmale der im Folgenden dargelegten Rollen-Druckmaschine 01 ausgeführt und/oder weitergebildet sein. Im Folgenden ist hierzu der Bedruckstoff 02 in der nachfolgend beschriebenen Druckmaschine 01 in einer Ausführung einer oben genannten, und z. B. unten näher detaillierten Ausführungsform und/oder die Druckfarbe als vorzugsweise polymerhaltige Druckfarbe in einer der o. g., und z. B. unten näher detaillierteren Ausführungen ausgebildet. Hierbei kann der Bedruckstoff 02 bevorzugt als Bedruckstoffbahn 02 ausgebildet sein.

Im Folgenden wird eine als Rollen-Druckmaschine 01 ausgeführte Druckmaschine 01 detaillierter beschrieben. Entsprechende Einzelheiten lassen sich aber genauso auf andere Druckmaschinen 01, beispielsweise Bogen-Druckmaschinen übertragen, sofern sie dazu nicht im Widerspruch stehen. Bedruckstoffrollen 101, die bevorzugt in der Rollenabspulvorrichtung 100 zum Einsatz kommen, weisen bevorzugt jeweils eine Hülse auf, auf die der bahnförmige Bedruckstoff 02 für einen Einsatz in der Rollen-Druckmaschine 01 aufgewickelt ist. Die Bedruckstoffbahn 02 weist bevorzugt eine Breite von 700 mm bis 2000 mm auf, kann aber auch eine beliebig kleinere oder bevorzugt größere Breite aufweisen. In der Rollenabspulvorrichtung 100 ist zumindest eine Bedruckstoffrolle 101 rotierbar angeordnet. In einer bevorzugten Ausführungsform ist die Rollenabspulvorrichtung 100 für die Aufnahme einer Bedruckstoffrolle 101 geeignet ausgebildet, weist also nur eine Speicherposition für eine Bedruckstoffrolle 101 auf. In einer anderen Ausführungsform ist die Rollenabspulvorrichtung 100 als Rollenwechsler 100 ausgebildet und weist Speicherpositionen für zumindest zwei Bedruckstoffrollen 101 auf. Bevorzugt ist der Rollenwechsler 100 derart ausgebildet, dass er einen fliegenden Rollenwechsel ermöglicht, also ein Verbinden einer ersten Bedruckstoffbahn 02 einer aktuell verarbeiteten Bedruckstoffrolle 101 mit einer zweiten Bedruckstoffbahn 02 einer nachfolgend zu verarbeitenden Bedruckstoffrolle 101, während sowohl die aktuell verarbeitete Bedruckstoffrolle 101, als auch die nachfolgend zu verarbeitende Bedruckstoffrolle 101 rotieren.

Eine Arbeitsbreite der Druckmaschine 01 ist eine Abmessung, die sich bevorzugt orthogonal zu dem vorgesehenen Transportweg des Bedruckstoffs 02 durch die zumindest eine erste Druckeinheit 200 erstreckt, weiter bevorzugt in der axialen Richtung A. Die Arbeitsbreite der Druckmaschine 01 entspricht bevorzugt einer maximalen Breite, die ein Bedruckstoff aufweisen darf, um noch mit der Druckmaschine 01 verarbeitet werden zu können, also einer maximalen mit der Druckmaschine 01 verarbeitbaren Bedruckstoffbreite.

Die Rollenabspulvorrichtung 100 weist bevorzugt je Speicherposition zumindest eine Rollenhaltevorrichtung 103 auf, die beispielsweise als Spannvorrichtung 103 und/oder als Klemmvorrichtung 103 ausgebildet ist. Bevorzugt stellt die zumindest eine Rollenhaltevorrichtung 103 zumindest einen ersten motorgetriebenen Rotationskörper 103 dar. Die zumindest eine Rollenhaltevorrichtung 103 dient einer rotierbaren Befestigung zumindest einer Bedruckstoffrolle 101. Die zumindest eine Rollenhaltevorrichtung 103 weist bevorzugt zumindest einen Antriebsmotor 104 auf.

Bevorzugt weist die Rollenabspulvorrichtung 100 entlang des Transportwegs der Bedruckstoffbahn 02 nach der Rollenhaltevorrichtung 103 eine bevorzugt an einem Tänzerhebel 121 auslenkbar angeordnete Tänzerwalze 113 und/oder einen ersten Bahnkantenausrichter 114 und/oder ein, einen von einer Zugwalze 118 und einem Zugpresseur 117 gebildeten Einzugspalt 119 und eine als erste Messwalze 141, insbesondere Einzugmesswalze 141 ausgebildete erste Messeinrichtung 141 aufweisendes Einzugwerk 139 auf. Diese Zugwalze 118 weist bevorzugt einen eigenen, als Zugantriebsmotor 146 ausgebildeten Antriebsmotor 146 auf, der bevorzugt mit einer Maschinensteuerung verbunden ist. Die Zugwalze 118 stellt bevorzugt zumindest einen zweiten motorgetriebenen Rotationskörper 118 dar. Mittels der Tänzerwalze 113 ist eine Bahnspannung einstellbar und in Grenzen haltbar und/oder wird die Bahnspannung bevorzugt in Grenzen gehalten. Gegebenenfalls weist die Rollenabspulvorrichtung 100 eine Klebe- und Schneideinrichtung auf, mittels der ein Rollenwechsel fliegend, d. h. ohne Stillstand der Bedruckstoffbahn 02 vonstatten gehen kann.

Dem ersten Bahnkantenausrichter 114 nachfolgend ist bevorzugt das Einzugwerk 139 angeordnet. Als Bestandteil des Einzugwerks 139 ist bevorzugt die zumindest die Zugwalze 118 angeordnet, mit der bevorzugt der Zugpresseur 117 zusammen den Einzugspalt 119 bildend angeordnet ist. Der Einzugspalt 119 dient einer Regelung einer Bahnspannung und/oder einem Transport des Bedruckstoffs 02. Bevorzugt ist mittels der zumindest einen als erste Messwalze 141 ausgebildeten ersten Messeinrichtung 141 die Bahnspannung messbar. Die zumindest eine als erste Messwalze 141 ausgebildete erste Messeinrichtung 141 ist in Transportrichtung der Bedruckstoffbahn 02 bevorzugt vor dem Einzugspalt 119 angeordnet.

Eine erste Druckeinheit 200 ist der Rollenabspulvorrichtung 100 bezüglich des Transportwegs des Bedruckstoffs 02 nachgeordnet. Die erste Druckeinheit 200 weist zumindest einen ersten Druckzentralzylinder 201 oder kurz Zentralzylinder 201 auf. Wenn im Folgenden von einem Zentralzylinder 201 die Rede ist, so ist immer ein Druckzentralzylinder 201 gemeint. Der zumindest eine erste Zentralzylinder 201 stellt bevorzugt zumindest einen dritten motorgetriebenen Rotationskörper 201 dar. Die Bedruckstoffbahn 02 umschlingt im Druckbetrieb den ersten Zentralzylinder 201 zumindest teilweise. Dabei beträgt ein Umschlingungswinkel bevorzugt zumindest 180° und weiter bevorzugt zumindest 270°. Der Umschlingungswinkel ist dabei der in Umfangsrichtung gemessene Winkel einer Zylindermantelfläche des ersten Zentralzylinders 201, entlang dem der Bedruckstoff 02 und insbesondere die Bedruckstoffbahn 02 mit dem ersten Zentralzylinder 201 in Kontakt steht. Dementsprechend stehen im Druckbetrieb in Umfangsrichtung gesehen bevorzugt zumindest 50 % und weiter bevorzugt zumindest 75 % der Zylindermantelfläche des ersten Zentralzylinders 201 mit der Bedruckstoffbahn 02 in Kontakt. Das bedeutet, dass eine, als Kontaktfläche zwischen dem zumindest einen ersten Zentralzylinder 201 und dem bevorzugt als Bedruckstoffbahn 02 ausgebildeten Bedruckstoff 02 vorgesehene Teilfläche einer Zylindermantelfläche des zumindest einen ersten Zentralzylinders 201 den Umschlingungswinkel um den zumindest einen ersten Zentralzylinder 201 aufweist, der bevorzugt zumindest 180° und weiter bevorzugt zumindest 270° beträgt.

Entlang des Transportwegs der Bedruckstoffbahn 02 vor dem ersten Zentralzylinder 201 der ersten Druckeinheit 200 ist bevorzugt zumindest eine bevorzugt als zweite Messwalze 216 ausgebildete zweite Messeinrichtung 216 zur Messung der Bahnspannung angeordnet.

Obwohl dies bei Anwendung o. g. Druckfarbe nicht unbedingt erforderlich ist oder sogar aus Kostengründen auch in der Druckmaschine 01 derart nicht vorgesehen sein kann, kann in einer Variante entlang des Transportwegs der Bedruckstoffbahn 02 vor dem ersten Zentralzylinder 201 der ersten Druckeinheit 200, insbesondere vor der ersten Druckeinheit 200, in einer bzgl. der möglichen Bedruckstoffe 02 noch variableren Ausführung der Druckmaschine 01 eine erste Bedruckstoffvorbereitungsvorrichtung 202 oder Bahnvorbereitungsvorrichtung 202 auf die Bedruckstoffbahn 02 einwirkend und/oder auf den vorgesehenen Transportweg der Bedruckstoffbahn 02 ausgerichtet angeordnet sein. Die in dieser Ausführung vorgesehene erste Bedruckstoffvorbereitungsvorrichtung 202 ist zumindest einer ersten Seite und bevorzugt beiden Seiten der Bedruckstoffbahn 02 zugeordnet und insbesondere zumindest auf diese erste Seite der Bedruckstoffbahn 02 und bevorzugt auf beide Seiten der Bedruckstoffbahn 02 einwirkend und/oder einwirkfähig ausgerichtet. In einer vorteilhaften weil weniger aufwändigen Ausführung der Druckmaschine 01 ist jedoch keine zusätzliche Bedruckstoffvorbereitungsvorrichtung 202; 402 vorgesehen und/oder zumindest in der ersten Betriebssituation eine ggf. vorhandene Bedruckstoffvorbereitungsvorrichtung 202; 402 inaktiv.

Bevorzugt ist entlang des Transportwegs der Bedruckstoffbahn 02 zwischen dem ersten Bahnkantenausrichter 114 und dem zumindest einen ersten Zentralzylinder 201 der von der Zugwalze 118 und dem Zugpresseur 117 gebildete Einzugspalt 119 angeordnet.

Die in einer Ausführung der Druckmaschine 01 vorgesehene zumindest eine erste Bedruckstoffvorbereitungsvorrichtung 202 ist in einer bevorzugten Ausführungsform entlang des Transportwegs der Bedruckstoffbahn 02 nach dem Einzugspalt 119 und vor dem ersten Zentralzylinder 201, insbesondere vor der ersten Druckeinheit 200, auf die Bedruckstoffbahn 02 einwirkend und/oder auf den Transportweg der Bedruckstoffbahn 02 ausgerichtet angeordnet. Bevorzugt ist die zumindest eine erste Bedruckstoffvorbereitungsvorrichtung 202 als zumindest eine Bedruckstoffreinigungsvorrichtung 202 oder Bahnreinigungsvorrichtung 202 ausgebildet. Alternativ oder zusätzlich ist die zumindest eine Bedruckstoffvorbereitungsvorrichtung 202 als zumindest eine Beschichtungsvorrichtung 202 ausgebildet insbesondere für wasserbasierte Beschichtungsmittel. Eine solche Beschichtung kann beispielsweise einer Grundierung mit einem sog. Primer dienen. Alternativ oder zusätzlich kann die zumindest eine Bedruckstoffvorbereitungsvorrichtung 202 als zumindest eine Korona-Vorrichtung 202 und/oder Entladungsvorrichtung 202 zur Korona-Behandlung des Bedruckstoffs 02 ausgebildet sein. Die Bedruckstoffvorbereitungsvorrichtung 202 ist für den Fall ihres Vorhandenseins z. B. im Bedruckstoffweg vor der Druckeinheit 200; 400 angeordnet und/oder verschieden von einer ggf. vorgesehenen, unten detaillierter erläuterten und z. B. dem Druckwerk im Bedruckstoffweg direkt vorgeordneten Applikationseinrichtung 218; 418.

Bevorzugt ist eine als erste Umlenkwalze 203 ausgebildete Walze 203 der ersten Druckeinheit 200 bezüglich ihrer Rotationsachse parallel zu dem ersten Zentralzylinder 201 angeordnet. Diese erste Umlenkwalze 203 ist bevorzugt von dem ersten Zentralzylinder 201 beabstandet angeordnet. Insbesondere existiert bevorzugt ein erster Zwischenraum 204 zwischen der ersten Umlenkwalze 203 und dem ersten Zentralzylinder 201, der größer ist als die Dicke der Bedruckstoffbahn 02. Die Bedruckstoffbahn 02 umschlingt bevorzugt einen Teil der ersten Umlenkwalze 203 und wird von dieser derart umgelenkt, dass der Transportweg der Bedruckstoffbahn 02 in dem ersten Zwischenraum 204 sowohl tangential zu der ersten Umlenkwalze 203 als auch tangential zu dem ersten Zentralzylinder 201 verläuft. Eine Mantelfläche der Umlenkwalze 203 besteht dabei bevorzugt aus einem vergleichsweise unelastischen Material, weiter bevorzugt einem Metall, noch weiter bevorzugt Stahl oder Aluminium.

Bevorzugt ist zumindest ein, z. B. als erster Presseur 206 ausgebildeter erster Zylinder 206 in der ersten Druckeinheit 200 angeordnet. Der erste Presseur 206 weist bevorzugt eine Mantelfläche auf, die aus einem elastischen Material, beispielsweise einem Elastomer besteht. Der erste Presseur 206 ist bevorzugt mittels eines Anstellantriebs an den ersten Zentralzylinder 201 anstellbar und/oder von diesem abstellbar angeordnet. In einem an den ersten Zentralzylinder 201 angestellten Zustand bildet der erste Presseur 206 bevorzugt zusammen mit dem ersten Zentralzylinder 201 einen ersten Presseurspalt 209. Die Bedruckstoffbahn 02 durchläuft bevorzugt im Druckbetrieb den ersten Presseurspalt 209. Durch die erste Umlenkwalze 203 und/oder bevorzugt durch den ersten Presseur 206 wird die Bedruckstoffbahn 02 bevorzugt flächig und weiter bevorzugt in eindeutiger und bekannter Lage an den ersten Zentralzylinder 201 angelegt. Bevorzugt steht abgesehen von höchstens dem ersten Presseur 206 und/oder gegebenenfalls weiteren Presseuren kein weiterer Rotationskörper, insbesondere keine weitere Walze und kein weiterer Zylinder mit dem zumindest einen ersten Zentralzylinder 201 in Kontakt. Bevorzugt ist die Rotationsachse des ersten Presseurs 206 unterhalb der Rotationsachse 207 des ersten Zentralzylinders 201 angeordnet.

Der erste Zentralzylinder 201 weist bevorzugt einen eigenen, dem ersten Zentralzylinder 201 zugeordneten ersten Antriebsmotor 208 auf, der bevorzugt als Elektromotor 208 ausgebildet ist und der weiter bevorzugt als Direktantrieb 208 und/oder Einzelantrieb 208 des ersten Zentralzylinders 201 ausgebildet ist. Unter einem Direktantrieb 208 ist dabei ein Antriebsmotor 208 zu verstehen, der ohne Zwischenschaltung weiterer mit dem Bedruckstoff 02 in Kontakt stehender Rotationskörper mit dem zumindest einen ersten Zentralzylinder 201 in Drehmoment übertragender und/oder übertragfähiger Verbindung steht. Unter einem Einzelantrieb 208 ist dabei ein Antriebsmotor 208 zu verstehen, der als Antriebsmotor 208 ausschließlich des zumindest einen ersten Zentralzylinders 201 ausgebildet ist. Der erste Antriebsmotor 208 des ersten Zentralzylinders 201 weist bevorzugt zumindest einen Permanentmagnet auf, der weiter bevorzugt Teil eines Rotors des ersten Antriebsmotors 208 des ersten Zentralzylinders 201 ist.

An dem ersten Antriebsmotor 208 des ersten Zentralzylinders 201 und/oder an dem ersten Zentralzylinder 201 selbst ist bevorzugt ein erster Drehwinkelsensor angeordnet, der eine Drehwinkellage des ersten Antriebsmotors 208 und/oder des ersten Zentralzylinders 201 selbst messend und/oder messfähig und an eine übergeordnete Maschinensteuerung sendend und/oder sendefähig ausgebildet ist. Der erste Drehwinkelsensor ist beispielsweise als Drehencoder oder Absolutwertencoder ausgebildet. Mit einem derartigen Drehwinkelsensor ist eine Drehstellung des ersten Antriebsmotors 208 und/oder bevorzugt eine Drehstellung des ersten Zentralzylinders 201 bevorzugt mittels der übergeordneten Maschinensteuerung absolut bestimmbar. Zusätzlich oder alternativ ist der erste Antriebsmotor 208 des ersten Zentralzylinders 201 derart schaltungstechnisch mit der Maschinensteuerung verbunden, dass die Maschinensteuerung aufgrund von von der Maschinensteuerung an den ersten Antriebsmotor 208 des ersten Zentralzylinders 201 vorgegebenen Soll-Daten zu einer Drehstellung des ersten Antriebsmotors 208 jederzeit über die Drehstellung des ersten Antriebsmotors 208 und damit zugleich die Drehstellung des ersten Zentralzylinders 201 informiert ist. Insbesondere ist bevorzugt ein die Drehwinkellage oder Drehstellung des ersten Zentralzylinders 201 und/oder des ersten Antriebsmotors 201 vorgebender Bereich der Maschinensteuerung direkt, insbesondere ohne zwischengeschalteten Sensor, mit einem zumindest einen Druckkopf 212 der ersten Druckeinheit 200 steuernden Bereich der Maschinensteuerung verbunden.

Innerhalb der ersten Druckeinheit 200 ist zumindest ein erstes Druckwerk 211 angeordnet. Das zumindest eine erste Druckwerk 211 ist bevorzugt in Rotationsrichtung des ersten Zentralzylinders 201 und damit entlang des Transportwegs der Bedruckstoffbahn 02 nach dem ersten Presseur 206 bevorzugt auf den zumindest einen ersten Zentralzylinder 201 einwirkend und/oder einwirkfähig und/oder ausgerichtet und/oder ausrichtbar angeordnet. Das zumindest eine erste Druckwerk 211 ist als ein erstes Tintenstrahldruckwerk 211 ausgebildet und wird auch erstes Ink-Jet-Druckwerk 211 genannt. Das erste Druckwerk 211 weist bevorzugt zumindest einen Düsenbalken 213 und bevorzugt mehrere Düsenbalken 213 auf. Das zumindest eine erste Druckwerk 211 und damit die zumindest eine erste Druckeinheit 200 weist bevorzugt den zumindest einen ersten Druckkopf 212 auf, der als Tintenstrahldruckkopf 212 ausgebildet ist. Bevorzugt weist der zumindest eine Düsenbalken 213 jeweils zumindest einen Druckkopf 212 und bevorzugt jeweils mehrere Druckköpfe 212 auf. Jeder Druckkopf 212 weist bevorzugt eine Mehrzahl von Düsen auf, aus denen Druckfarbetropfen ausgestoßen werden und/oder ausstoßbar sind. Ein Düsenbalken 213 ist dabei ein Bauteil, das sich bevorzugt über zumindest 80 % und weiter bevorzugt zumindest 100 % der Arbeitsbreite der Druckmaschine 01 erstreckt und als Träger des zumindest einen Druckkopfes 212 dient. Bevorzugt ist eine axiale Länge des Ballens des zumindest einen ersten Zentralzylinders 201 zumindest so groß wie die Arbeitsbreite der Druckmaschine 01. Dabei ist ein einziger oder sind mehrere Düsenbalken 213 je Druckwerk 211 angeordnet. Jeder Düse ist bevorzugt ein eindeutig festgelegter Zielbereich auf die Richtung A der Breite der Bedruckstoffbahn 02 und bevorzugt auf die Richtung A insbesondere der Rotationsachse 207 des zumindest einen ersten Zentralzylinders 201 bezogen zugeordnet. Bevorzugt ist jeder Zielbereich einer Düse insbesondere bezogen auf die Umfangsrichtung des zumindest einen ersten Zentralzylinders 201 zumindest in dem Druckbetrieb eindeutig festgelegt. Insbesondere ist ein Zielbereich einer Düse derjenige insbesondere im Wesentlichen geradlinige Raumbereich, der sich in einer Ausstoßrichtung Dieser Düse von dieser Düse aus erstreckt.

Der zumindest eine erste Düsenbalken 213 erstreckt sich bevorzugt orthogonal zu dem Transportweg des Bedruckstoffs 02 über die Arbeitsbreite der Druckmaschine 01. Der zumindest eine Düsenbalken 213 weist bevorzugt zumindest eine Reihe von Düsen auf. Die zumindest eine Reihe von Düsen weist in der axialen Richtung A gesehen bevorzugt über die gesamte Arbeitsbreite der Druckmaschine 01 und/oder Breite des Ballens des zumindest einen ersten Zentralzylinders 201 in regelmäßigen Abständen Düsenöffnungen auf. In einer Ausführungsform ist dazu ein einziger durchgehender Druckkopf 212 angeordnet, der sich in der axialen Richtung A über die gesamte Arbeitsbreite der Druckmaschine 01 und/oder die gesamte Breite des Ballens des zumindest einen ersten Zentralzylinders 201 erstreckt. Dabei ist die zumindest eine Reihe von Düsen bevorzugt als zumindest eine lineare, sich über die ganze Breite der Bedruckstoffbahn 02 in der axialen Richtung A erstreckende Aneinanderreihung von einzelnen Düsen ausgebildet. In einer anderen, bevorzugten Ausführungsform sind in der axialen Richtung A nebeneinander mehrere Druckköpfe 212 an dem zumindest einen Düsenbalken 213 angeordnet. Da üblicherweise solche einzelnen Druckköpfe 212 nicht bis zu einem Rand ihres Gehäuses mit Düsen versehen sind, sind bevorzugt zumindest zwei und weiter bevorzugt genau zwei sich in der axialen Richtung A erstreckende Reihen von Druckköpfen 212 in Umfangsrichtung des ersten Zentralzylinders 201 versetzt zueinander angeordnet, bevorzugt so, dass in axialer Richtung A aufeinander folgende Druckköpfe 212 bevorzugt abwechselnd einer der zumindest zwei Reihen von Druckköpfen 212 angehören, bevorzugt immer abwechselnd einer ersten und einer zweiten von zwei Reihen von Druckköpfen 212. Zwei solche Reihen von Druckköpfen 212 bilden eine Doppelreihe von Druckköpfen 212. Die zumindest eine Reihe von Düsen ist bevorzugt nicht als eine einzige lineare Aneinanderreihung von Düsen ausgebildet, sondern ergibt sich als Summe mehrerer einzelner, weiter bevorzugt zweier, in Umfangsrichtung versetzt zueinander angeordneter Aneinanderreihungen von Düsen.

Weist ein Druckkopf 212 mehrere Düsen auf, so bilden alle Zielbereiche der Düsen dieses Druckkopfes 212 zusammen einen Arbeitsbereich dieses Druckkopfes 212. Arbeitsbereiche von Druckköpfen 212 eines Düsenbalkens 213 und insbesondere einer Doppelreihe von Druckköpfen 212 grenzen in axialer Richtung A gesehen aneinander an und/oder überlappen in der axialen Richtung A gesehen. Auf diese Weise ist auch bei in axialer Richtung A nicht durchgehendem Druckkopf 212 sichergestellt, dass in axialer Richtung A gesehen in regelmäßigen und bevorzugt periodischen Abständen Zielbereiche von Düsen des zumindest einen Düsenbalkens 213 und/oder insbesondere jeder Doppelreihe von Druckköpfen 212 liegen. In jedem Fall erstreckt sich ein gesamter Arbeitsbereich des zumindest einen Düsenbalkens 213 bevorzugt über zumindest 90 % und weiter bevorzugt 100 % der Arbeitsbreite der Druckmaschine 01 und/oder der gesamten Breite des Ballens des zumindest einen ersten Zentralzylinders 201 in der axialen Richtung A. An einer oder beiden Seiten bezüglich der axialen Richtung A kann ein schmaler Bereich der Bedruckstoffbahn 02 und/oder des Ballens des ersten Zentralzylinders 201 vorhanden sein, der nicht dem Arbeitsbereich der Düsenbalken 213 angehört. Ein gesamter Arbeitsbereich des zumindest einen Düsenbalkens 213 ist bevorzugt aus allen Arbeitsbereichen von Druckköpfen 212 dieses zumindest einen Düsenbalkens zusammengesetzt und ist bevorzugt aus allen Zielbereichen von Düsen dieser Druckköpfe 212 dieses zumindest einen Düsenbalkens 213 zusammengesetzt. Bevorzugt entspricht ein gesamter Arbeitsbereich einer Doppelreihe von Druckköpfen 212 in der axialen Richtung A gesehen dem Arbeitsbereich des zumindest einen Düsenbalkens 213.

Bevorzugt weist der zumindest eine Düsenbalken 213 in Umfangsrichtung bezüglich des zumindest einen ersten Zentralzylinders 201 mehrere Reihen von Düsen auf. Bevorzugt weist jeder Druckkopf 212 eine Vielzahl von Düsen auf, die weiter bevorzugt in einer Matrix von mehreren Zeilen in axialer Richtung A und/oder mehreren Spalten bevorzugt in Umfangsrichtung des zumindest einen ersten Zentralzylinders 201 angeordnet sind, wobei derartige Spalten weiter bevorzugt schräg zu der Umfangsrichtung verlaufend angeordnet sind, beispielsweise um eine Auflösung eines Druckbildes zu erhöhen. Bevorzugt sind in einer Richtung orthogonal zu der axialen Richtung A, insbesondere in Transportrichtung entlang des Transportwegs des Bedruckstoffs 02 und/oder in Umfangsrichtung bezogen auf den zumindest einen Zentralzylinder 201 mehrere Reihen von Druckköpfen 212, weiter bevorzugt vier Doppelreihen und noch weiter bevorzugt acht Doppelreihen von Druckköpfen 212 nacheinander angeordnet. Weiter bevorzugt sind zumindest in dem Druckbetrieb in Umfangsrichtung bezüglich des zumindest einen ersten Zentralzylinders 201 mehrere Reihen von Druckköpfen 212, weiter bevorzugt vier Doppelreihen und noch weiter bevorzugt acht Doppelreihen von Druckköpfen 212 nacheinander auf den zumindest einen ersten Zentralzylinder 201 ausgerichtet angeordnet.

Dabei sind die Druckköpfe 212 zumindest in dem Druckbetrieb bevorzugt derart ausgerichtet, dass die Düsen jedes Druckkopfes 212 im Wesentlichen in radialer Richtung auf die Zylindermantelfläche des zumindest einen ersten Zentralzylinders 201 weisen. Abweichungen von radialen Richtungen innerhalb eines Toleranzbereichs von bevorzugt höchstens 10° und weiter bevorzugt höchstens 5° sollen dabei als im Wesentlichen radiale Richtungen gelten. Das bedeutet, dass der zumindest eine auf die Mantelfläche des zumindest einen ersten Zentralzylinders 201 ausgerichtete Druckkopf 212 bezüglich der Rotationsachse 207 des zumindest einen ersten Zentralzylinders 201 in einer radialen Richtung auf die Mantelfläche des zumindest einen ersten Zentralzylinders 201 ausgerichtet ist. Diese radiale Richtung ist dabei eine auf die Rotationsachse 207 des zumindest einen ersten Zentralzylinders 201 bezogen radiale Richtung. Jeder Doppelreihe von Druckköpfen 212 ist bevorzugt eine Druckfarbe einer bestimmten Farbe zugeordnet und/oder zuordenbar, beispielsweise jeweils eine der Farben Schwarz, Cyan, Gelb und Magenta oder ein Lack, beispielsweise ein Klarlack. Das entsprechende Tintenstrahldruckwerk 211 ist bevorzugt als Vierfarbendruckwerk 211 ausgebildet und ermöglicht einen einseitigen vierfarbigen Bedruck der Bedruckstoffbahn 02. Es ist auch möglich, weniger oder mehr unterschiedliche Farben mit einem Druckwerk 211 zu verdrucken, beispielsweise zusätzliche Sonderfarben. Bevorzugt sind dann entsprechend mehr oder weniger Druckköpfe 212 und/oder Doppelreihen von Druckköpfen 212 innerhalb dieses entsprechenden Druckwerks 211 angeordnet. In einer Ausführungsform sind zumindest in dem Druckbetrieb mehrere Reihen von Druckköpfen 212, weiter bevorzugt vier Doppelreihen und noch weiter bevorzugt acht Doppelreihen von Druckköpfen 212 nacheinander auf zumindest eine Oberfläche zumindest eines Übertragungsmittels bzw. Übertragungskörpers, beispielsweise zumindest eines Übertragungszylinders und/oder zumindest eines Übertragungsbands ausgerichtet angeordnet.

Der zumindest eine Druckkopf 212 arbeitet zur Erzeugung von Druckfarbetropfen bevorzugt nach dem drop-on-demand-Verfahren, bei dem Druckfarbetropfen bei Bedarf gezielt erzeugt werden. Bevorzugt kommt je Düse zumindest ein Piezoelement zum Einsatz, das bei Anlage einer Spannung ein mit Druckfarbe gefülltes Volumen mit hoher Geschwindigkeit um einen bestimmten Anteil verringern kann. Dadurch wird Druckfarbe verdrängt, die durch eine, mit dem mit Druckfarbe gefüllten Volumen verbundene Düse ausgestoßen wird und zumindest einen Druckfarbetropfen bildet. Durch Anlage unterschiedlicher Spannungen an das Piezoelement wird auf den Stellweg des Piezoelements und damit die Verringerung des Volumens und damit die Größe der Druckfarbetropfen Einfluss genommen. Auf diese Weise sind Farbabstufungen im entstehenden Druckbild realisierbar, ohne eine zum Druckbild beitragende Tropfenanzahl zu verändern (Amplitudenmodulation). Es ist auch möglich, je Düse zumindest ein Heizelement einzusetzen, das in einem mit Druckfarbe gefüllten Volumen mit hoher Geschwindigkeit durch Verdampfen von Druckfarbe eine Gasblase erzeugt. Das zusätzliche Volumen der Gasblase verdrängt Druckfarbe, die wiederum durch die entsprechende Düse ausgestoßen wird und zumindest einen Druckfarbetropfen bildet.

Beim drop-on-demand-Verfahren ist eine Tropfenablenkung nach deren Ausstoß aus der entsprechenden Düse nicht notwendig, da es möglich ist, eine Zielposition des jeweiligen Druckfarbetropfens auf der bewegten Bedruckstoffbahn 02 bezüglich der Umfangsrichtung des zumindest einen ersten Zentralzylinders 201 allein durch einen Emissionszeitpunkt des jeweiligen Druckfarbetropfens und eine Rotationsgeschwindigkeit des ersten Zentralzylinders 201 und/oder durch die Drehstellung des ersten Zentralzylinders 201 festzulegen. Durch einzelne Ansteuerung jeder Düse werden nur zu ausgewählten Zeitpunkten und an ausgewählten Orten Druckfarbetropfen von dem zumindest einen Druckkopf 212 auf die Bedruckstoffbahn 02 übertragen. Dies geschieht in Abhängigkeit von der Rotationsgeschwindigkeit und/oder der Drehwinkellage des zumindest einen ersten Zentralzylinders 201, einem Abstand zwischen der jeweiligen Düse und der Bedruckstoffbahn 02 sowie der Lage des Zielbereichs der jeweiligen Düse bezüglich des Umfangswinkels. Dadurch ergibt sich ein erwünschtes Druckbild, das in Abhängigkeit von der Ansteuerung aller Düsen gestaltet ist. Ein Ausstoß von Tintentropfen aus der zumindest einen Düse des zumindest einen Druckkopfs 212 erfolgt bevorzugt in Abhängigkeit von der von der Maschinensteuerung vorgegebenen Drehstellung des ersten Antriebsmotors 208. Dabei werden die von der Maschinensteuerung an den ersten Antriebsmotor 208 vorgegebene Soll-Daten der Drehstellung des ersten Antriebsmotors 208 bevorzugt in Echtzeit in eine Berechnung von Daten zur Ansteuerung der Düsen des zumindest einen Druckkopfs 212 mit einbezogen. Ein Abgleich mit Ist-Daten der Drehstellung des ersten Antriebsmotors 208 ist bevorzugt nicht notwendig und findet bevorzugt nicht statt. Eine exakte und konstante Lage der Bedruckstoffbahn 02 relativ zu dem zumindest einen ersten Zentralzylinder 201 ist daher für ein passergerechtes und/oder registergerechtes Druckbild von großer Bedeutung.

Die Düsen des zumindest einen Druckkopfes 212 sind derart angeordnet, dass ein Abstand zwischen den Düsen und der auf der Zylindermantelfläche des zumindest einen ersten Zentralzylinders 201 angeordneten Bedruckstoffbahn 02 bevorzugt zwischen 0,5 mm und 5 mm und weiter bevorzugt zwischen 1 mm und 1,5 mm beträgt. Die hohe Winkelauflösung und/oder die hohe Abtastfrequenz des Drehwinkelsensors und/oder die große Genauigkeit der von der Maschinensteuerung vorgegebenen und on dem ersten Antriebsmotor 208 des ersten Zentralzylinders 201 verarbeiteten Soll-Daten zur Drehlage des ersten Antriebsmotors 208 des ersten Zentralzylinders 201 ermöglicht eine sehr genaue Lagebestimmung und/oder Kenntnis der Lage der Bedruckstoffbahn 02 relativ zu den Düsen und deren Zielbereichen. Eine Tropfenflugzeit zwischen den Düsen und der Bedruckstoffbahn 02 ist beispielsweise durch einen Einlernvorgang und/oder durch den bekannten Abstand zwischen den Düsen und der Bedruckstoffbahn 02 und eine bekannte Tropfengeschwindigkeit bekannt. Aus der Drehwinkellage des zumindest einen ersten Zentralzylinders 201 und/oder des ersten Antriebs 208 des zumindest einen ersten Zentralzylinders 201, der Rotationsgeschwindigkeit des zumindest einen ersten Zentralzylinders 201 und der Tropfenflugzeit wird ein idealer Zeitpunkt zum Ausstoß eines jeweiligen Tropfens bestimmt, so dass eine passergerechte und/oder registergerechte Bebilderung der Bedruckstoffbahn 02 erreicht wird.

Bevorzugt ist zumindest ein als erster Druckbildsensor ausgebildeter Sensor angeordnet, weiter bevorzugt an einer Stelle entlang des Transportwegs der Bedruckstoffbahn 02 nach dem ersten Druckwerk 211. Der zumindest eine erste Druckbildsensor ist beispielsweise als erste Zeilenkamera oder als erste Flächenkamera ausgebildet. Der zumindest eine erste Druckbildsensor ist beispielsweise als zumindest ein CCD-Sensor und/oder als zumindest ein CMOS-Sensor ausgebildet. Mittels dieses zumindest einen ersten Druckbildsensors und einer entsprechenden Auswerteeinheit, beispielsweise der übergeordneten Maschinensteuerung, wird bevorzugt eine Ansteuerung aller in Umfangsrichtung des zumindest einen ersten Zentralzylinders 201 hintereinander liegender und/oder wirkender Druckköpfe 212 und/oder Doppelreihen von Druckköpfen 212 des ersten Druckwerks 211 überwacht und geregelt. In einer ersten Ausführungsform des zumindest einen Druckbildsensors ist nur ein erster Druckbildsensor angeordnet, dessen Sensorfeld die gesamte Breite des Transportwegs der Bedruckstoffbahn 02 umfasst. In einer zweiten Ausführungsform des zumindest einen Druckbildsensors ist nur ein erster Druckbildsensor angeordnet, der in der Richtung A orthogonal zu der Richtung des Transportwegs der Bedruckstoffbahn 02 bewegbar ausgebildet ist. In einer dritten Ausführungsform des zumindest einen Druckbildsensors sind mehrere Druckbildsensoren angeordnet, deren jeweilige Sensorfelder jeweils unterschiedliche Bereiche des Transportwegs der Bedruckstoffbahn 02 umfassen. Bevorzugt sind diese Bereiche in der Richtung A orthogonal zu der Richtung des Transportwegs der Bedruckstoffbahn 02 zueinander versetzt angeordnet. Bevorzugt umfasst eine Gesamtheit der Sensorfelder der mehreren Druckbildsensoren eine gesamte Breite des Transportwegs der Bedruckstoffbahn 02.

Eine Lage von Bildpunkten, die von Druckfarbetropfen gebildet werden, die aus einem jeweils ersten Druckkopf 212 stammen, wird bevorzugt mit einer Lage von Bildpunkten verglichen, die von Druckfarbetropfen gebildet werden, die aus einem jeweils zweiten, in Umfangsrichtung des zumindest einen ersten Zentralzylinders 201 nach dem jeweils ersten Druckkopf 212 liegenden Druckkopf 212 stammen. Dies geschieht bevorzugt unabhängig davon, ob diese jeweils ersten und zweiten, in Umfangsrichtung des zumindest einen ersten Zentralzylinders 201 hintereinander liegenden und/oder wirkenden Druckköpfe 212 eine gleiche oder eine unterschiedliche Druckfarbe verarbeiten. Es wird eine Abstimmung der Lagen der aus unterschiedlichen Druckköpfen 212 stammenden Druckbilder überwacht. Bei gleichen Druckfarben wird ein registerhaltiges Zusammenfügen von Teilbildern überwacht. Bei unterschiedlichen Druckfarben wird ein Passer oder Farbregister überwacht. Bevorzugt wird mit den Messwerten des zumindest einen Druckbildsensors auch eine Qualitätskontrolle des Druckbildes durchgeführt.

In einem regulären Druckbetrieb sind alle Druckköpfe 212 ortsfest angeordnet. Dadurch wird eine dauerhafte passergerechte und/oder registergerechte Ausrichtung aller Düsen sichergestellt. Es sind unterschiedliche Situationen denkbar, in denen eine Bewegung der Druckköpfe 212 notwendig ist. Eine erste solche Situation stellt ein fliegender Rollenwechsel oder allgemein ein Rollenwechsel mit Klebevorgang dar. Dabei wird eine Bedruckstoffbahn 02 mittels eines Klebestreifens mit einer anderen Bedruckstoffbahn 02 verbunden. Dadurch ergibt sich eine Verbindungsstelle, die den gesamten Transportweg der Bedruckstoffbahn 02 durchlaufen muss. Diese Verbindungsstelle weist ein Dicke, also eine kleinste Abmessung auf, die größer ist als eine Dicke der Bedruckstoffbahn 02. Im Wesentlichen ist die Verbindungsstelle so dick wie zwei Bedruckstoffbahnen 02 und der Klebestreifen zusammen. Dadurch können sich Schwierigkeiten ergeben, wenn die Verbindungsstelle den Zwischenraum zwischen den Düsen der Druckköpfe 212 und der Zylindermantelfläche des zumindest einen ersten Zentralzylinders 201 passiert. Der zumindest eine Düsenbalken 213 ist daher in zumindest einer Richtung relativ zu der Rotationsachse 207 des zumindest einen ersten Zentralzylinders 201 bewegbar. Auf diese Weise kann der Abstand ausreichend vergrößert werden, muss aber im Anschluss wieder entsprechend verringert werden. Eine zweite solche Situation ergibt sich beispielsweise bei einer Wartung und/oder Reinigung zumindest eines der Druckköpfe 212. Die Druckköpfe 212 sind bevorzugt einzeln an dem zumindest einen Düsenbalken 213 befestigt und einzeln von dem zumindest einen Düsenbalken 213 lösbar. Dadurch können einzelne Druckköpfe 212 gewartet und/oder gereinigt und/oder ersetzt werden.

Sind mehrere zueinander bewegbare Düsenbalken 213 angeordnet, so können bei einer Rückführung zumindest eines Düsenbalkens 213 in eine Drucklage minimale Fehlstellungen der Düsenbalken 213 untereinander auftreten. Ein Ausrichtbedarf kann also auftreten, insbesondere aller Druckköpfe 212 eines Düsenbalkens 213 zu Druckköpfen 212 anderer Düsenbalken 213. Wird ein neu und/oder wieder anzuordnender Druckkopf 212 an dem zumindest einen Düsenbalken 213 befestigt, an dem bereits zumindest ein anderer Druckkopf 212 befestigt ist, so ergibt sich nicht zwangsläufig sondern höchstens zufällig eine exakt passende Ausrichtung dieses neu und/oder wieder anzuordnenden Druckkopfes 212 zu dem zumindest einen bereits befestigten Druckkopf 212 und zwar in Umfangsrichtung und/oder in axialer Richtung A bezüglich des zumindest einen ersten Zentralzylinders 201. Auch hier kann sich also ein Ausrichtbedarf ergeben, insbesondere eines einzelnen Druckkopfes 212 zu anderen Druckköpfen 212 des gleichen Düsenbalkens 213 und/oder anderer Düsenbalken 213.

Zumindest ein Sensor erfasst eine Lage des Zielbereichs zumindest eines neu und/oder wieder angeordneten Druckkopfs 212 relativ zu einer Lage des Zielbereichs zumindest eines bereits zuvor befestigten Druckkopfs 212. Eine Einbaulage des zumindest einen neu und/oder wieder angeordneten Druckkopfes 212 in Umfangsrichtung bezüglich des zumindest einen ersten Zentralzylinders 201 lässt sich über die Ansteuerung der Düsen dieses Druckkopfes 212 ausgleichen, bevorzugt analog zu der bereits beschriebenen Anpassung von Druckköpfen 212 unterschiedlicher Doppelreihen von Druckköpfen 212. Eine Einbaulage des zumindest einen neu und/oder wieder angeordneten Druckkopfes 212 in axialer Richtung A bezüglich des zumindest einen ersten Zentralzylinders 201 wird mittels zumindest einer Einstellmechanik ausgeglichen. Bevorzugt weisen mehrere Druckköpfe 212 jeweils eine eigene Einstellmechanik auf, weiter bevorzugt weisen alle Druckköpfe 212 jeweils eine eigene Einstellmechanik auf.

Die Druckmaschine 01weist zumindest ein Versorgungssystem für Beschichtungsmittel, insbesondere die Druckfarben, insbesondere Druckfarbversorgungssystem auf. Bevorzugt weisen mehrere Druckköpfe 212, beispielsweise mehrere Druckköpfe 212 eines gemeinsamen Düsenbalkens 213, insbesondere mehrere oder weiter bevorzugt alle Druckköpfe 212 jeweils einer Doppelreihe von Druckköpfen 212 ein gemeinsames Versorgungssystem für Beschichtungsmittel bzw. Druckfarben auf. Dieses gemeinsame Versorgungssystem weist bevorzugt zumindest einen Normalvorrat auf. Mit dem zumindest einen Normalvorrat ist jeweils zumindest eine erste Flüssigkeitsleitung oder Farbleitung je Druckkopf 212 verbunden. Bevorzugt ist der zumindest eine Normalvorrat über zumindest eine Zuleitung und zumindest eine Ableitung mit zumindest einem und bevorzugt zumindest einem gleichen Zwischenspeicher verbunden.

Der Normalvorrat weist bevorzugt zumindest in einem Druckbetrieb und weiter bevorzugt dauerhaft einen bis auf in einem engen Toleranzbereich liegende Abweichungen konstanten Füllstand auf. Dieser konstante Füllstand ist beispielsweise durch einen bevorzugt passiven Überlaufabfluss und einen Zustrom von Druckfarbe realisierbar. Bevorzugt weist der zumindest einen Normalvorrat und/oder die zumindest eine Ableitung zumindest einen bevorzugt passiven Überlaufabfluss auf, dessen Abflussseite bevorzugt mit dem zumindest einen Zwischenspeicher verbunden und/oder verbindbar angeordnet ist. Bevorzugt ist innerhalb der zumindest einen Zuleitung und/oder innerhalb der zumindest einen Ableitung jeweils zumindest ein bevorzugt als Sperrventil ausgebildetes Ventil angeordnet. Bevorzugt ist in der zumindest einen Zuleitung zumindest eine erste Flüssigkeitspumpe angeordnet. Bevorzugt herrscht in dem Normalvorrat ein gesteuerter und/oder geregelter Normaldruck, der weiter bevorzugt relativ zu einem Umgebungsdruck gesteuert und/oder geregelt wird. Bevorzugt liegt in dem Normalvorrat ein Unterdruck gegenüber dem Umgebungsdruck vor.

Bevorzugt wird durch zumindest eine Pumpe Druckfarbe aus dem Zwischenspeicher in den Normalvorrat gepumpt. Bevorzugt ist in dem zumindest einen Normalvorrat zumindest ein als erster Gasraum vorgesehenes Volumen angeordnet. Der zumindest eine erste Gasraum ist bevorzugt über zumindest eine erste Gasleitung mit zumindest einer ersten Gaspumpe verbunden. Bevorzugt herrscht in einem zweiten Gasraum des Zwischenspeichers ein gleicher Druck, wie in dem zumindest einen ersten Gasraum des zumindest einen Normalvorrats. Bevorzugt ist der zumindest eine Zwischenspeicher mit zumindest einem Pufferspeicher verbunden, weiter bevorzugt über zumindest eine Saugleitung. Bevorzugt herrscht in dem Pufferspeicher Umgebungsdruck. Bevorzugt wird Druckfarbe durch den relativen Unterdruck aus dem Pufferspeicher in dem Zwischenspeicher gefördert.

Der Zwischen- und/oder Normalvorrat können ein Tintenreservoir bilden, in welchem eine o. g., vorzugsweise polymerhaltige Druckfarbe als Tinte vorgehalten ist.

Bevorzugt weisen mehrere Druckköpfe 212, beispielsweise mehrere Druckköpfe 212 eines gemeinsamen Düsenbalkens 213, insbesondere mehrere oder weiter bevorzugt alle Druckköpfe 212 jeweils einer Doppelreihe von Druckköpfen 212 ein gemeinsames Spannungsversorgungssystem auf. Bevorzugt erstreckt sich zumindest eine gemeinsame Stromleitung der Spannungsversorgung innerhalb des jeweiligen zumindest einen Düsenbalkens über zumindest 50 %, weiter bevorzugt zumindest 75 % und noch weiter bevorzugt zumindest 90 % einer Breite des Arbeitsbereichs des jeweiligen zumindest einen Düsenbalkens 213 in der axialen Richtung A und/oder der Arbeitsbreite der Druckmaschine 01. Bevorzugt weist jeder Druckkopf 212 dieses jeweiligen zumindest einen Düsenbalkens 213 jeweils zumindest eine eigene Spannungsleitung auf, die mit dieser gemeinsamen Stromleitung der Spannungsversorgung verbunden ist. Bevorzugt weist jeder Druckkopf 212 dieses jeweiligen zumindest einen Düsenbalkens 213 jeweils zumindest eine eigene Datenleitung auf, die mit einer Recheneinheit verbunden ist, die bezüglich der axialen Richtung A außerhalb des Arbeitsbereichs des jeweiligen zumindest einen Düsenbalkens 213 und/oder bezüglich der axialen Richtung A außerhalb jedes für Bedruckstoff 02 vorgesehenen Transportwegs der Druckmaschine 01 angeordnet ist. Somit verlaufen also zumindest entlang eines sich in der axialen Richtung A erstreckenden Abschnitts des Düsenbalkens 213 zumindest eine Datenleitung je Druckkopf 212 dieses zumindest einen Düsenbalkens 213 parallel zueinander.

Bevorzugt ist zumindest eine Düsenreinigungsvorrichtung angeordnet, die zumindest eine Reihe von Waschdüsen und/oder Bürsten und/oder Abziehern aufweist.

Nachdem die Bedruckstoffbahn 02 die zumindest eine erste Druckeinheit 200 passiert hat, wird die Bedruckstoffbahn 02 entlang ihres Transportwegs weiter transportiert und bevorzugt dem zumindest einen ersten Trockner 301 der zumindest einen Trocknereinheit 300 zugeführt. Bevorzugt steht die erste, von der zumindest einen ersten Druckeinheit 200 bedruckte Seite der Bedruckstoffbahn 02 zwischen einer letzten Berührstelle der Bedruckstoffbahn 02 mit dem zumindest einen ersten Zentralzylinder 201 der zumindest einen ersten Druckeinheit 200 und einem Einwirkbereich des zumindest einen ersten Trockners 301 mit keinem Bestandteil der Rollen-Druckmaschine 01 in Kontakt. Bevorzugt steht die zweite, insbesondere von der ersten Druckeinheit 200 nicht bedruckte, den zumindest einen ersten Zentralzylinder 201 der zumindest einen ersten Druckeinheit 200 berührende Seite der Bedruckstoffbahn 02 zwischen der letzten Berührstelle der Bedruckstoffbahn 02 mit dem ersten Zentralzylinder 201 der zumindest einen ersten Druckeinheit 200 und dem Einwirkbereich des zumindest einen ersten Trockners 301 mit zumindest einer Umlenkwalze 214 der zumindest einen ersten Druckeinheit 200 und/oder mit zumindest einer Umlenkwalze 312 des zumindest einen ersten Trockners 301 in Kontakt. Bevorzugt ist zumindest eine, weiter bevorzugt als dritte Messwalze 214 ausgebildete dritte Messeinrichtung 214 angeordnet. Diese dritte Messeinrichtung 214 dient der Messung der Bahnspannung. Weiter bevorzugt ist die zumindest eine Umlenkwalze 214 der ersten Druckeinheit 200 mit der als dritte Messwalze 214 ausgebildeten dritten Messeinrichtung 214 identisch.

Der zumindest eine erste Trockner 301 ist bevorzugt als ein Infrarotstrahlungstrockner 301 ausgebildet. Der zumindest eine erste Trockner 301 weist bevorzugt zumindest eine Strahlungsquelle 302 auf, die bevorzugt als Infrarotstrahlungsquelle 302 ausgebildet ist. Eine Strahlungsquelle 302, bevorzugt Infrarotstrahlungsquelle 302 ist dabei eine Vorrichtung, mittels der gezielt elektrische Energie in Strahlung, bevorzugt Infrarotstrahlung umgewandelt wird und/oder umwandelbar ist und auf die Bedruckstoffbahn 02 gerichtet wird und/oder richtbar ist. Die zumindest eine Strahlungsquelle 302 weist bevorzugt einen definierten Einwirkbereich auf. Insbesondere ist der Einwirkbereich einer Strahlungsquelle 302 jeweils der Bereich, der alle Punkte enthält, die insbesondere ohne Unterbrechung geradlinig direkt oder über Reflektoren mit der Strahlungsquelle 302 verbunden werden können. Der Einwirkbereich des zumindest einen ersten Trockners 301 setzt sich aus den Einwirkbereichen aller Strahlungsquellen 302 des zumindest einen ersten Trockners 301 zusammen. Der Einwirkbereich des zumindest einen ersten Trockners 301 weist bevorzugt von der zumindest einen Strahlungsquelle 302 zu einem der zumindest einen Strahlungsquelle 302 nächstgelegenen Teil des Transportwegs der Bedruckstoffbahn 02. Durch zumindest eine Belüftungsöffnung wird Luft in den Innenraum des zumindest einen ersten Trockners 301 eingeleitet. Im Inneren des ersten Trockners 301 wird durch die Infrarotstrahlung aus der Bedruckstoffbahn 02 zu entfernendes Wasser und/oder Lösungsmittel der Druckfarben entfernt und von der eingeleiteten Luft aufgenommen. Diese Luft wird dann durch zumindest eine Entlüftungsöffnung aus dem zumindest einen ersten Trockner 301 abgeführt.

In einer bevorzugten Ausführungsform weist der vorgesehene Transportweg für Bedruckstoff 02 durch den zumindest einen ersten Trockner 301 zumindest zwei Teilstücke auf, die jeweils in Richtungen mit vertikalen Komponenten verlaufen, weiter bevorzugt mit größeren vertikalen als gegebenenfalls vorhandenen horizontalen Komponenten. Bevorzugt verläuft der vorgesehene Transportweg des Bedruckstoffs entlang des einen Teilstücks zumindest mit einer Komponente in vertikaler Richtung nach oben. Bevorzugt verläuft der vorgesehene Transportweg des Bedruckstoffs entlang des anderen Teilstücks zumindest mit einer Komponente in vertikaler Richtung nach unten. Bevorzugt sind das eine Teilstück und das andere Teilstück des vorgesehenen Transportwegs durch zumindest ein vorgesehenes Verbindungsstück des vorgesehenen Transportwegs miteinander verbunden. Bevorzugt verläuft das zumindest eine Verbindungsstück in einer Richtung mit horizontaler Komponente, weiter bevorzugt mit größerer horizontaler als gegebenenfalls vorhandener vertikaler Komponente. Dadurch kann der zumindest eine Trockner 301 bevorzugt besonders kompakt aufgebaut werden.

In Transportrichtung der Bedruckstoffbahn 02 nach dem Einwirkbereich der zumindest einen Strahlungsquelle 302 des zumindest einen ersten Trockners 301 ist bevorzugt zumindest eine erste Kühleinrichtung 303 angeordnet. Die zumindest eine erste Kühleinrichtung 303 weist bevorzugt zumindest eine erste Kühlwalze 304 und bevorzugt einen ersten, an die zumindest eine erste Kühlwalze 304 anstellbaren und/oder angestellten Kühlwalzenpresseur 306 und bevorzugt zumindest eine, an die zumindest eine erste Kühlwalze 304 anstellbare und/oder angestellte Anlenkwalze 307; 308 auf. Ein der zumindest einen ersten Kühlwalze 304 zugeordneter erster, als erster Kühlwalzenantriebsmotor 311 ausgebildeter Antriebsmotor 311 und der erste Kühlwalzenpresseur 306 sind bevorzugt Teil einer Bahnspannungsregelung, also die Bahnspannung regelnd angeordnet und bevorzugt zu diesem Zweck zumindest teilweise und/oder zeitweise mit der übergeordneten Maschinensteuerung verbunden. Die zumindest eine erste Kühlwalze 304 stellt bevorzugt zumindest einen vierten motorgetriebenen Rotationskörper 304 dar. Die Bedruckstoffbahn 02 umschlingt und berührt bevorzugt entlang ihres Transportwegs die zumindest eine erste Kühlwalze 304 mit einem Umschlingungswinkel von bevorzugt zumindest 180° und weiter bevorzugt zumindest 270°. Der erste Kühlwalzenpresseur 306 bildet bevorzugt mit der zumindest einen ersten Kühlwalze 304 einen ersten Kühlwalzenspalt 309, in dem bevorzugt die Bedruckstoffbahn 02 angeordnet ist und/oder den bevorzugt die Bedruckstoffbahn 02 durchläuft. Dabei wird die Bedruckstoffbahn 02 von dem Kühlwalzenpresseur 306 an die zumindest eine erste Kühlwalze 304 angepresst. Die zumindest eine erste Kühlwalze 304 der zumindest einen ersten Kühleinrichtung 303 ist bevorzugt als von einem Kühlmittel durchströmte Kühlwalze 304 ausgebildet.

Entlang des Transportwegs der Bedruckstoffbahn 02 nach der zumindest einen ersten Kühleinrichtung 303 ist bevorzugt zumindest eine zweite Druckeinheit 400 angeordnet. Bevorzugt ist entlang des Transportwegs der Bedruckstoffbahn 02 bevorzugt unmittelbar vor der zumindest einen zweiten Druckeinheit 400 und bevorzugt nach dem zumindest einen ersten Trockner 301 und insbesondere nach der zumindest einen ersten Druckeinheit 200 zumindest ein zweiter Bahnkantenausrichter angeordnet, der bevorzugt manuell oder angetrieben steuerbar und/oder regelbar ausgebildet ist. Die zumindest eine zweite Druckeinheit 400 ist analog zu der ersten Druckeinheit 200 aufgebaut. Insbesondere weist die zweite Druckeinheit 400 einen zweiten Druckzentralzylinder 401 oder kurz Zentralzylinder 401 auf, der im Druckbetrieb von der Bedruckstoffbahn 02 umschlungen wird, und zwar ebenfalls mit einem Umschlingungswinkel von bevorzugt zumindest 180° und weiter bevorzugt zumindest 270°. Der zweite Zentralzylinder 401 stellt bevorzugt einen fünften motorgetriebenen Rotationskörper 401 dar. Der zweite Zentralzylinder 401 der zweiten Druckeinheit 400 weist bevorzugt eine Rotationsrichtung auf, die einer Rotationsrichtung des zumindest einen ersten Zentralzylinders 201 entgegengesetzt ist. Entlang des Transportwegs der Bedruckstoffbahn 02 vor dem zweiten Zentralzylinder 401 der zweiten Druckeinheit 400, insbesondere vor der zweiten Druckeinheit 400, kann in einer oben auch in Verbindung mit der ersten Bedruckstoffreinigungsvorrichtung 202 genannten Variante stattdessen oder zusätzlich eine zweite Bedruckstoffvorbereitungsvorrichtung 402 bzw. Bahnreinigungsvorrichtung 402 auf die Bedruckstoffbahn 02 einwirkend angeordnet sein. Bei Anwendung einer o. g. Druckfarbe kann diese jedoch ebenfalls gänzlich entfallen.

Der Transportweg der Bedruckstoffbahn 02 durch die zumindest eine zweite Druckeinheit 400 verläuft analog zu dem Transportweg durch die zumindest eine erste Druckeinheit 200. Insbesondere umschlingt die Bedruckstoffbahn 02 bevorzugt einen Teil einer zweiten Umlenkwalze 403 und wird von dieser derart umgelenkt, dass der Transportweg der Bedruckstoffbahn 02 in dem zweiten Zwischenraum 404 sowohl tangential zu der zweiten Umlenkwalze 403 als auch tangential zu dem zweiten Zentralzylinder 401 verläuft. Bevorzugt ist zumindest ein als zweiter Presseur 406 ausgebildeter Zylinder 406 in der zweiten Druckeinheit 400 angeordnet. Der zweite Presseur 406 ist bevorzugt analog zu dem ersten Presseur 206 aufgebaut und angeordnet, insbesondere bezüglich seiner Bewegbarkeit und eines zweiten Presseurspalts 409. Der zweite Zentralzylinder 401 ist bevorzugt analog zu dem ersten Zentralzylinder 201 angeordnet und aufgebaut, insbesondere bezüglich eines zweiten Antriebsmotors 408 des zweiten Zentralzylinders 401 und eines entsprechenden bevorzugt angeordneten zweiten Drehwinkelsensors, der eine Drehwinkellage des zweiten Antriebsmotors 408 und/oder des zweiten Zentralzylinders 401 selbst messend und/oder messfähig und an die übergeordnete Maschinensteuerung sendend und/oder sendefähig ausgebildet ist.

Innerhalb der zweiten Druckeinheit 400 ist bevorzugt zumindest ein zweites, als Tintenstrahldruckwerk 411 oder Ink-Jet-Druckwerk 411 ausgebildetes Druckwerk 411 in Rotationsrichtung des zweiten Zentralzylinders 401 und damit entlang des Transportwegs der Bedruckstoffbahn 02 nach dem zweiten Presseur 406 auf den zweiten Zentralzylinder 401 ausgerichtet angeordnet. Das zumindest eine zweite Druckwerk 411 der zumindest einen zweiten Druckeinheit 400 ist bevorzugt identisch mit dem zumindest einen ersten Druckwerk 211 der zumindest einen ersten Druckeinheit 200, insbesondere bezüglich zumindest eines Düsenbalkens 413, zumindest eines, als Tintenstrahldruckkopf 412 ausgebildeten Druckkopfes 412 und deren Anordnung in Doppelreihen, des Ausführung und Auflösung des Druckverfahrens, der Anordnung, Ausrichtung und Ansteuerung der Düsen und der Bewegbarkeit und Einstellbarkeit des zumindest einen Düsenbalkens 413 und des zumindest einen Druckkopfes 412 mittel zumindest einer Einstellmechanik mit entsprechendem Elektromotor. Auch eine analoge Schutzabdeckung und/oder Reinigungsvorrichtung ist bevorzugt angeordnet. Auch eine korrekte Ausrichtung der Druckköpfe 412 der zumindest einen zweiten Druckeinheit 400 wird bevorzugt dadurch überprüft, dass zumindest ein Sensor ein gedrucktes Druckbild erfasst und die Maschinensteuerung dieses Druckbild auswertet. Dieser zumindest eine Sensor ist bevorzugt zumindest ein zweiter Druckbildsensor, der analog zu dem zumindest einen ersten Druckbildsensor ausgebildet ist. Bevorzugt ist das zumindest eine zweite Druckwerk 411 als Vierfarbendruckwerk 411 ausgebildet.

Bezüglich des Transportwegs der Bedruckstoffbahn 02 ist nach der zumindest einen zweiten Druckeinheit 400 zumindest ein zweiter Trockner 331 angeordnet. Nachdem die Bedruckstoffbahn 02 die zumindest eine zweite Druckeinheit 400 passiert hat, wird die Bedruckstoffbahn 02 entlang ihres Transportwegs weiter transportiert und bevorzugt dem zumindest einem zweiten Trockner 331 der zumindest einen Trocknereinheit 300 zugeführt. Der zumindest eine zweite Trockner 331 ist bevorzugt analog zu dem zumindest einen ersten Trockner 301 aufgebaut. Der zumindest eine erste Trockner 301 und der zumindest eine zweite Trockner 331 sind Bestandteile der zumindest einen Trocknereinheit 300. Bevorzugt steht die zweite, von der zumindest einen zweiten Druckeinheit 400 bedruckte Seite der Bedruckstoffbahn 02 zwischen einer letzten Berührstelle der Bedruckstoffbahn 02 mit dem zweiten Zentralzylinder 401 der zumindest einen zweiten Druckeinheit 400 und einem Einwirkbereich des zumindest einen zweiten Trockners 301 mit keinem Bestandteil der Rollen-Druckmaschine 01 in Kontakt. Bevorzugt ist zumindest eine Umlenkwalze 414 der zweiten Druckeinheit 400 angeordnet. Bevorzugt ist diese zumindest eine Umlenkwalze 414 als fünfte Messeinrichtung 414, insbesondere fünfte Messwalze 414 ausgebildet.

Der Aufbau des zumindest einen zweiten Trockners 331 gleicht dem Aufbau des zumindest einen ersten Trockners 301, insbesondere im Hinblick auf einen für Bedruckstoff vorgesehenen Transportweg und/oder eine Ausbildung als Strömungstrockner 331 und/oder Strahlungstrockner 331 und/oder Heißlufttrockner 331 und/oder Infrarotstrahlungstrockner 331 und/oder UV-Strahlungstrockner 331. Insbesondere weist der zumindest eine zweite Trockner 331 bevorzugt zumindest eine zweite Kühlwalze 334 auf, die weiter bevorzugt zumindest einen sechsten motorgetriebenen Rotationskörper 334 darstellt. Bevorzugt ist die zweite Kühlwalze 334 mittels eines zweiten Kühlwalzenantriebs 341 angetrieben und/oder antreibbar. Bevorzugt ist der zumindest eine zweite Trockner 331 bezüglich der beschriebenen Bauteile im Wesentlichen und weiter bevorzugt vollständig symmetrisch zu dem zumindest einen ersten Trockner 301 aufgebaut. Der zumindest eine zweite Trockner 331 ist bevorzugt Teil der gleichen Trocknereinheit 300 wie der zumindest eine erste Trockner 301 und ist weiter bevorzugt in einem gleichen Gehäuse 329 angeordnet. Bezüglich einer räumlichen Anordnung ist die Trocknereinheit 300 und sind damit bevorzugt der zumindest eine erste Trockner 301 und der zumindest eine zweite Trockner 331 bevorzugt zwischen der zumindest einen ersten Druckeinheit 200 und der zumindest einen zweiten Druckeinheit 400 angeordnet.

Entlang des Transportwegs der Bedruckstoffbahn 02 nach dem zumindest einen zweiten Trockner 331 ist zumindest eine Auszugwalze 501 angeordnet. Die zumindest eine Auszugwalze 501 weist bevorzugt einen eigenen, als Auszugwalzenantrieb 504 ausgebildeten Antriebsmotor 504 auf. Die zumindest eine Auszugwalze 504 stellt bevorzugt zumindest einen siebten motorgetriebenen Rotationskörper 504 dar. Die zumindest eine Auszugwalze 501 bildet bevorzugt zusammen mit einem an die zumindest eine Auszugwalze 501 angestellten und/oder anstellbaren Auszugpresseur 502 einen Auszugspalt 503, in dem die Bedruckstoffbahn 02 eingeklemmt ist und durch den die Bedruckstoffbahn 02 gefördert wird. Der Auszugspalt 503 dient bevorzugt der Regelung einer Bahnspannung und/oder einem Transport der Bedruckstoffbahn 02.

Bezüglich des Transportwegs der Bedruckstoffbahn 02 vor und/oder nach der Auszugwalze 501, jedoch insbesondere entlang des Transportwegs des Bedruckstoffs 02 nach dem zumindest einen ersten Trockner 301, ist bevorzugt zumindest eine Wiederbefeuchtungseinrichtung angeordnet, die bevorzugt einen zu großen Feuchtigkeitsverlust der Bedruckstoffbahn 02 auf Grund der Behandlung durch die Trocknereinheit 300 ausgleicht.

Entlang des Transportwegs der Bedruckstoffbahn 02 nach dem Auszugspalt 503 und/oder nach der Wiederbefeuchtungseinrichtung ist zumindest eine Nachbearbeitungsvorrichtung 500 angeordnet, die bevorzugt als Falzvorrichtung 500 ausgebildet ist und/oder einen Bogenschneider 500 und/oder eine Planauslage 500 aufweist oder als Aufwickelvorrichtung 500 ausgebildet ist. In dieser und/oder durch diese Nachbearbeitungsvorrichtung 500 wird die Bedruckstoffbahn 02 bevorzugt gefalzt und/oder geschnitten und/oder geheftet und/oder sortiert und/oder kuvertiert und/oder versandt und/oder aufgewickelt.

In zumindest einer Variante der Druckmaschine ist die Druckmaschine 01 als Rollen-Rotations-Tintenstrahldruckmaschine 01 ausgebildet und ist zumindest ein Übertragungsmittel oder ein Übertragungskörper mit dem zumindest einen ersten Druckzentralzylinder 201 einen Übertragungsspalt bildend angeordnet. Dann ist bevorzugt der zumindest eine Druckkopf 212 auf das zumindest eine Übertragungsmittel ausgerichtet. Von diesem ist unmittelbar oder über ggf. mittelbar über ein oder mehrere weitere Übertragungsmittel die Druckfarbe auf den Bedruckstoff 02 aufbringbar.

Im Folgenden werden bevorzugte Ausführungen einer im Inkjetverfahren betriebenen und/oder betreibbaren Druckmaschine 01, bevorzugt in Art einer oben beschriebenen Druckmaschine 01, jedoch nicht hierauf beschränkt, sowie hiermit durchgeführte bzw. durchführbare Betriebsarten und Betriebsmitteln dargelegt.

Die Druckmaschine kann sich in einer Ausführung dadurch auszeichnen, dass in zumindest einer ersten Betriebsweise, z. B. einem Betrieb zur Produktion von Zeitungs- oder zeitungsähnlichen oder Taschenbuchprodukten, wenigstens durch eine Druckeinheit 200; 400 bzw. durch ein Druckwerk 411; 411 ein erster Bedruckstoff 02, insbesondere eine Bedruckstoffbahn 02 geführt und/oder bedruckt ist oder wird bzw. bedruckbar ist, der beispielsweise in Art eines ungestrichenen oder leicht gestrichenen Offsetdruckpapiers ausgebildet ist. Der Bedruckstoff 02 ist hierbei bevorzugt als holzhaltiges, d. h. ligninhaltiges, Papier ausgeführt. Dieses weist dann z. B. mindestens 2 %, insbesondere mindestens 5 % Gewichtsanteil an verholzten Fasern auf. Der Bedruckstoff 02 bzw. das zugrunde liegende Papier weist z. B. ein Flächengewicht nach ISO 536 bevorzugt zwischen 35 bis 80 g/m², bevorzugt zwischen 35 und 60 g/m², auf. Der Bedruckstoff 02 ist z. B. aus ungestrichenem, beispielsweise durch einen Softkalander (beheizte Hartgusswalze gegen Walze mit Elastomermantel) satiniertem (aufgebessertem) Zeitungspapier und/oder aus einem geringfügig bis leicht gestrichenem Papier ausgebildet und weist im letzteren Fall z. B. einen vorzugsweise beidseitigen Strich mit beispielsweise einem Strichgewicht von insgesamt bis zu 25 g/m² und/oder z. B. ein Flächengewicht von bis zu 80 g/m² auf. Das Papier weist z. B. eine Rauigkeit nach Bendtsen (ISO 8791-2) von mindestens 30 ml/min auf. Zur Ermittlung kann eine ringförmige Messfläche 100 x 0,15 mm bei einem Druck von 10 N/cm² auf die Probe bei einem Differenzdruck von 15 ± 0,2 bar beaufschlagt sein. In einer bevorzugen Weiterbildung kann der als Papier ausgeführte Bedruckstoff 02 zumindest einen Anteil, z. B. von mindestens 10%, vorzugsweise mindestens 20 %, von aus Altpapier stammenden Sekundärfasern enthalten. Der Bedruckstoff 02 kann eine Materialstärke d02, i.d.R. als Dicke d02 bezeichnet, von 50 bis 120 µm, insbesondere von 60 bis 110 µm aufweisen (z. B. nach ISO 534).

Vorzugsweise weist der erste Bedruckstoff 02 auf seiner zu bedruckenden Oberfläche keine Beschichtung auf, welche mit hygroskopisch wirksamen Salzen, z. B. Alkali- oder Erdalkalichloride, insbesondere Calciumchlorid (CaCl2) angereichert ist oder diese zumindest enthält.

Die Druckmaschine 01 kann sich insbesondere dadurch auszeichnen, dass, z. B. in zumindest der ersten Betriebsweise, z. B. einem Betrieb zur Produktion von Zeitungs- oder zeitungsähnlichen oder Buchprodukten, wenigstens durch eine Druckeinheit 200; 400 bzw. ein Druckwerk 211; 411 ein erster Bedruckstoff 02, insbesondere eine Bedruckstoffbahn 02 geführt und/oder bedruckt ist oder wird bzw. bedruckbar ist, welcher auf seiner zu bedruckenden Oberfläche ohne eine zusätzliche Beschichtung auf dem das Grundmaterial bildende Bedruckstoffmaterial ausgeführt ist. D. h., der erste Bedruckstoff 02 ist lediglich einschichtig und/oder homogen aus dem z. B. mit Füll-, Leim- und/oder Hilfsstoffen ergänzten Fasermaterialienverbund ausgebildet und z. B. als entweder maschinenglattes Zeitungsdruckpapier oder ggf. lediglich durch Anwendung eines Kalanders als sog. "aufgebessertes Zeitungsdruckpapier" im Bereich der Oberfläche geglättet. Der Bedruckstoff 02 ist vorzugsweise in zumindest dieser Betriebsweise in der Art eines ungestrichenen Offsetdruckpapiers, d. h. ohne weitere kostenintensive und/oder das Papier unnötig beschwerende Beschichtung, sei es eine Haftbeschichtung oder ein Strich, ausgebildet. Hierbei kann zwar beispielsweise ein Bindemittel bereits vor der Fertigstellung des Papiers als sog. "Masseleimung" dem mit den Zusätzen versehenen Faserbrei, der sog. "Flotte", beigemischt und daher Bestandteil des z. B. ansonsten unbeschichteten Bedruckstoffs 02 bzw. Papiers sein. Dieser Bedruckstoff 02 aus ggf. die Masseleimung umfassenden Papier weist keine zusätzliche "Oberflächenleimung", d. h. keine Beschichtung mit einem Leim, Bindemittel oder einem Strich auf. Der Bedruckstoff 02 kann in dieser ungestrichenen Ausführung eine Dicke d02 von 50 bis 100 µm, insbesondere von 60 bis 90 µm aufweisen.

Der erste Bedruckstoff 02 der zumindest ersten Betriebsweise ist vorzugsweise ohne Oberflächenleimung und/oder vorzugsweise als ungestrichenes Papier, vorzugsweise sog. Zeitungsdruckpapier, maschinenglatt oder durch Kalandern aufgebessert oder satiniert, ausgebildet. Diese Art Bedruckstoff 02 wird im Folgenden auch kurz als Zeitungsdruck- oder kurz Zeitungspapier bezeichnet. Der z. B. in Form einer Bedruckstoffbahn 02 ausgebildete und vorzugsweise durch wenigstens eine Druckeinheit 200; 400 bzw. ein Druckwerk 211; 411 geführte Bedruckstoff 02 kann beispielsweise durch offenporiges und/oder ggf. satiniertes und/oder insbesondere holzhaltiges (d. h. ligninhaltiges) Papier, z. B. ggf. als sog. "Naturpapier" (d. h. mit unbehandelter, ggf. lediglich maschinell satinierter Oberfläche), gebildet sein. Er kann hierbei auch ein Anteil von recyceltem Altpapier (z. B. mindestens 50% aus recyceltem Papier stammende Sekundärfasern) enthalten oder es kann sich gar um einen im Wesentlichen aus Altpapier hergestellten Bedruckstoff 02 handeln. Der Holzgehalt (insbesondere das Lignin) des Zeitungspapiers trägt zur Steifigkeit der meist großflächigen und dünnen Seiten eines fertigen zeitungsartigen oder Zeitungsproduktes bei.

Dieser beispielsweise als insbesondere handelsübliches Zeitungspapier und/oder ohne Oberflächenleimung und/oder vorzugsweise als ungestrichenes Papier ausgebildete erste Bedruckstoff 02 weist z. B. ein Flächengewicht nach ISO 536 von bevorzugt zwischen 35 bis 60 g/m², insbesondere 40 bis 50 g/m² für "normales" (maschinenglattes) und z. B. 50 bis 60 g/m² für aufgebessertes Papier auf. Der derart ausgebildete, hier vorzugsweise im Tintenstrahlverfahren in zumindest einer ersten Betriebsweise oder Maschinenausführung bedruckte oder zu bedruckende Bedruckstoff 02 weist beispielsweise eine Rauhigkeit nach Bendtsen (ISO 8791/2) von z. B. mehr als 70 ml/min, insbesondere von mehr als 80 ml/min oder gar mindestens 100 ml/min (maschinenglatt) auf.

In zur ersten Betriebsweise alternativer Ausführung oder Betriebsweise oder einer wahlweise durchführbaren zweiten Betriebsweise oder Maschinenausführung ist als (zweiter) Bedruckstoff 02 ein geringfügig oder leicht gestrichenes, vorzugsweise holzhaltiges Papier vorgesehen. Das Papier kann als LWC-Papier (Low Wight Coated) mit z. B. einem Strichgewicht von 10 bis 25 g/m² Strich, als ULWC-Papier (Ultra Low Wight Coated) mit z. B. einem Strich von 5 bis 10 g/m² oder als FC-Papier (Film Coated) mit z. B. einem von Null verschiedenen Strichgewicht von weniger als 5 % ausgebildet sein. Dabei ist beispielsweise das Papier beidseitig gestrichen und das Strichgewicht als Summe beider Seiten angegeben. Der zweite Bedruckstoff 02 bzw. das zugrunde liegende Papier weist - samt Strich - z. B. ein Flächengewicht nach ISO 536 bevorzugt zwischen 40 bis 80 g/m², insbesondere 40 bis 75 g/m² auf. Der als Papier ausgebildete zweite Bedruckstoff 02 weist hier vorzugsweise eine geringere Rauhigkeit als das z. B. wahlweise in der ersten Betriebsweise in der Druckmaschine 01 angeordnete und/oder bedruckte Zeitungspapier auf. Die Rauigkeit nach Bendtsen (ISO 8791/2) liegt beispielsweise bei höchstens 60 ml/min, insbesondere gar bei höchstens 50 ml/min. Dieser zweite Bedruckstoff 02 aus ggf. die Masseleimung umfassenden Papier und einem geringfügigem oder leichten Strich weist darüber hinaus vorzugsweise jedoch keine zusätzliche "Oberflächenleimung", d. h. keine Beschichtung mit einem Leim oder anderweitigem Bindemittel auf. Der zweite Bedruckstoff 02 kann in dieser gestrichenen Ausführung eine Dicke d02 von 60 bis 120 µm, insbesondere von 70 bis 110 µm aufweisen.

In zur ersten und/oder zweiten Betriebsweise alternativer Ausführung oder Betriebsweise oder einer wahlweise durchführbaren dritten Betriebsweise oder Maschinenausführung ist als (dritter) Bedruckstoff 02, welcher in seiner Beschaffenheit Überscheidungen mit dem ersten und/oder dem zweiten Bedruckstoff 02 haben kann, ein Bedruckstoff 02 mit einer Saugfähigkeit im Bereich seiner zu bedruckenden Oberfläche entsprechend der Wasseraufnahme nach Cobb 60 (ISO 535) von höchstens 70 g/m², insbesondere höchstens 60 g/m², ausgebildet. Dies kann auch für bevorzugt gestrichene Papiere oder ggf. lediglich leicht oder geringfügig gestrichener Papiere der zweiten Bedruckstoffausführung anzuwenden sein. In einer Ausführung zeichnet sich der dritte Bedruckstoff 02 dadurch aus, dass er eine zu bedruckende Oberfläche mit einem Strich von mehr als 20 g/m², z. B. mindestens 25 g/m² Strichgewicht oder aus Kunststoff oder Metall oder Lack umfasst, insbesondere als Kunststoff- oder Metallfolie 02 oder als Bahn 02 oder Bogen 02 mit lackierter oder metallischer oder Kunststoffoberfläche ausgebildet ist, und/oder mit einer Saugfähigkeit entsprechend einer Wasseraufnahme nach Cobb 60 (DIN 53132) von weniger als 5 g/m², insbesondere weniger als 1 g/m², ausgebildet ist.

In einer Ausführungsvariante des ersten, zweiten oder dritten Betriebs bzw. Bedruckstoffs 02 ist der zugeführte bzw. bedruckte Bedruckstoff 02 als Papier oder Karton mit einer Grammatur von 30 g/m² bis 450 g/m² Flächengewicht und/oder im Bereich seiner zu bedruckenden Oberfläche einer Rauigkeit nach Bendtsen von mindestens 30 ml/min und/oder höchstens 200 ml/min und/oder zwischen 30 ausgebildet. In der dritten Ausführung des Betriebes bzw. des Bedruckstoffes 02 ist dieser infolge eines Striches oder andersartigen Oberflächenglättung und/oder -verdichtung im Bereich seiner zu bedruckenden Oberfläche mit einer Saugfähigkeit entsprechende der Wasseraufnahme nach Cobb 60 von höchstens 70 g/m², insbesondere höchstens 60 g/m², ausgebildet.

Zusätzlich oder stattdessen ist der Bedruckstoff 02 in einer Ausführungsvariante des ersten, zweiten oder dritten Betriebs bzw. Bedruckstoffs 02 im Bereich seiner zu bedruckenden Oberfläche ohne - eine z. B. im Inkjetdruck bekannte Oberflächenveredelung, insbesondere ohne eine Silikat-Pigmente und/oder Polyvinylpigmente umfassende Oberflächenveredelung, ausgebildet. In einer speziellen Variante hierzu ist der als Papier oder Karton ausgeführte erste, zweite oder dritte Bedruckstoff 02 als gänzlich unbeschichteter Bedruckstoff 02, z. B. Bedruckstoffbahn 02, ausgebildet.

Um besonders scharfe Konturen im Druckbild und/oder eine hohe Druckgeschwindigkeit zu ermöglichen, kann die hier im Injetverfahren verwendete Druckfarbe besonders dünnflüssig ausgebildet sein, was das Eindringen in den jeweiligen, insbesondere ersten oder ggf. zweiten, Bedruckstoff 02 und/oder das Verlaufen auf der Oberfläche des, ggf. zweiten bzw. insbesondere dritten, Bedruckstoffs 02 begünstigt. Ersteres kann einerseits dazu führen, dass die Feuchtigkeit tief in den Bedruckstoff eindringt und dementsprechend zeit- und/oder energieintensiv wieder zu beseitigen ist. Andererseits kann die wässrige Flüssigkeit bei entsprechender Porosität des Bedruckstoffs 02 die in ihr dispergierten Farbpartikel in das Bedruckstoffinnere mitreißen, wenn diese z. B. einen vergleichsweise kleinen mittleren Durchmesser aufweisen, was seinerseits zu einer sich erheblich verschlechternden Farbbrillianz führen und andererseits ggf. zu einem verstärkten Durchscheinen führen kann. Zweiteres kann durch Verlaufen ebenfalls zu einer sich erheblich verschlechternden Druckqualität führen.

Um der dargelegten Problematik z. B. auch für nicht für Inkjetdruck extra optimierte Bedruckstoffe 02 und/oder im industriellen Inkjetdruck zu begegnen, ist eine wasserbasierte Druckfarbe vorgesehen, wie sie in einer oder in mehreren Ausführungsvarianten nachfolgend charakterisiert ist. Die nachfolgend beschriebene Druckfarbe bildet vorzugsweise eine Inkjet-Tinte.

Die in der Druckmaschine 01, insbesondere in einem oder mehreren Druckköpfen 212; 412 einer als Inkjetdruckmaschine ausgebildeten Druckmaschine 01, in welcher beispielsweise ein o. g. erster, zweiter oder dritter Bedruckstoff 02 in ggf. einer seiner Varianten oder speziellen Ausprägungen vorgesehen und/oder bedruckbar ist und/oder bedruckt wird, vorgesehene und/oder zum Drucken verwendete Druckfarbe ist - z. B. für alle nachfolgenden Ausführungsformen und/oder -varianten - wasserbasiert ausgebildet und weist bevorzugt eine Viskosität von 4,0 bis 10,0 cP, bevorzugt 5,0 bis 9,0 cP, gemessen beispielsweise mit einem Bohlin Viskosimeter (Spindel 18, 100rpm, bei z. B. 25°).

Bevorzugt weist diese Druckfarbe - z. B. für alle nachfolgenden Ausführungsformen und/oder-varianten - eine Oberflächenspannung von z. B. 20 bis 40 mN/m, insbesondere 35 bis 35 mN/m² bzw. dyn/cm, gemessen beispielsweise mit einem Sensadyne ST bei 25° Messtemperatur, auf.

In einer oder mehreren der vorgenannten Ausführungen der Druckfarbe enthält diese - z. B. für alle nachfolgenden Ausführungsformen und/oder-varianten - bevorzugt Farbpigmente F, deren mittlerer Durchmesser, gemessen beispielsweise mittels eines Nanotrac analysers, höchstens bei 0,2 µm, insbesondere höchstens 0,15 µm liegt.

In einer oder mehreren der vorgenannten Ausführungen der Druckfarbe liegt deren Dichte - z. B. für alle nachfolgenden Ausführungsformen und/oder -varianten - bevorzugt zwischen 1,05 und 1,25 g/ml, insbesondere zwischen 1,10 und 1,08 g/ml.

In einer oder mehreren der vorgenannten Ausführungen der Druckfarbe enthält diese - z. B. für alle nachfolgenden Ausführungsformen und/oder-varianten - bevorzugt ein z. B. organisches Bindemittel, insbesondere ein Polymer P, z. B. kohlenwasserstoff-Polymer. Dieses kann grundsätzlich ein Styrol-Poymer, ein Halogen-Kohlenwasserstoff-Polymer, ein Vinylpolymer, ein z. B. fluoriertes Acrylpolymer, ein floriertes oder ein nichtfloriertes Methacryl-Polymer, ein Polyether-Mischporlymerisat oder deren Coplymere oder eine Mischung aus zwei oder mehreren der genannten Stoffe oder sein.

Bevorzugt kann die Druckfarbe jedoch in einer ersten Ausführung ein acrylbasiertes Polymer oder Copolymer, z. B. ein Acrylat und/oder beispielsweise ein Polymer P aus der Gruppe der Polyvinylester, z. B. Polyvenylacetat P, umfassen. Der Polymerisationsgrad kann 100 bis 5.000 betragen. Die Glastemperatur liegt z. B. zwischen 15 und 50 °C.

Beispielsweise entfällt in einer ersten Ausprägung für die erste, vorteilhaften Ausführung der Druckfarbe mindestens 0,1 %, z. B. mindestens 1 % des Gewichtsanteils, in einer anderen Ausprägung mindestens 3 %, in einer weiteren Ausprägung mindestens 5 % Gewichtanteil der Druckfarbe auf das Polymer, wobei z. B. die Höchstgrenze bei 30 % oder alternativ bei 15 % liegt. Auf den Wasseranteil entfällt beispielsweise mindestens 30 %, bevorzugt mindestens 50 %. Ein als Feststoff angegebener Pigmentanteil kann in einer Ausprägung bei 2 bis 10 %, insbesondere 3 bis 8 Gew.% und in einer alternativen Ausprägung bei 3 bis 20 %, insbesondere bei 5 bis 15 % liegen. Die Summe dieser drei Bestandteile kann je nach Beigabe weiterer Inhaltstoffe 80 bis 100 %, alternativ 90 bis 100%, weiter alternativ 95 bis 100 % der Druckfarbe bilden. Zusätzlich zu den drei Komponenten können als weitere Inhaltsstoffe Hilfsstoffe, z. B. oberflächenaktive und/oder entschäumende Substanzen und/oder ein Cosolvent vorgesehen sein.

In einer bevorzugten Ausprägung der ersten Ausführung für die Druckfarbe umfasst diese als Bestandteil 0,1 bis 30 % eines Acrylates oder Polyacrylates, 30 bis 60 % Wasser, 0,1 % bis 20 % eines Harzes oder Copolymers, 2 bis 10 % Pigmentanteil, 0,1 bis 5 % Hilfsstoffe, wie z. B. umfassend oberflächenaktive und/oder entschäumende Substanzen, und bis zu 25 % eines Cosolvents. Vorteilhaft umfasst sie 0,5 bis 4,8 % einer oberflächenaktiven Substanz, insbesondere Netzmittel.

In einer alternativen, zweiten Ausführung der Druckfarbe kann insbesondere ein Ethylen-Polymer, in einer dritten Ausführung ein Propylen-Polymer oder in weiterer Ausführung ein Buten-Polymer von der Druckfarbe als Polymer P umfasst sein. Beispielsweise entfällt in einer ersten Ausprägung für diese zweite Ausführung der Druckfarbe ebenfalls mindestens 1 % des Gewichtsanteils, in einer anderen Ausprägung mindestens 3 %, in einer weiteren Ausprägung mindestens 5 % Gewichtanteil der Druckfarbe auf das Polymer, wobei z. B. die Höchstgrenze bei 30 % oder alternativ bei 15 % liegt. Auf den Wasseranteil entfällt beispielsweise ebenfalls mindestens 30 %, bevorzugt mindestens 50 %. Ein Pigmentanteil kann auch hier bei 3 bis 20 %, in einer Alternative bei 5 bis 15 % liegen. Die Summe dieser drei Bestandteile kann je nach Beigabe weiterer Inhaltstoffe 80 bis 100 %, alternativ 90 bis 100%, weiter alternativ 95 bis 100 % der Druckfarbe bilden.

Auch für andere als in den beiden vorteilhaften Ausführung genannte Polymere P, oder Mischungen von Polymeren P, insbesondere als organisches oder KohlenwasserstoffPolymere oder-Copolymere vorliegende Polymere P oder Mischungen, kann in gleicher Weise auf das Polymer P bzw. eine Mischung derartiger Polymere P mindestens 0,1 %, z. B. mindestens 1 % des Gewichtsanteils, in einer anderen Ausprägung mindestens 3 %, in einer weiteren Ausprägung mindestens 5 % Gewichtanteil der Druckfarbe auf das Polymer P entfallen, wobei z. B. die Höchstgrenze bei 30 % oder alternativ bei 15 % liegt. Auf den Wasseranteil entfällt auch hier beispielsweise mindestens 30 %, bevorzugt mindestens 50 %. Ein als Feststoff angegebener Pigmentanteil kann in einer Ausprägung ebenfalls bei 2 bis 10 %, insbesondere 3 bis 8 Gew.% und in einer alternativen Ausprägung bei 3 bis 20 %, insbesondere bei 5 bis 15 % liegen. Die Summe dieser drei Bestandteile kann je nach Beigabe weiterer Inhaltstoffe 80 bis 100 %, alternativ 90 bis 100%, weiter alternativ 95 bis 100 % der Druckfarbe bilden. Zusätzlich zu dern drei Komponenten können als weitere Inhaltsstoffe Hilfsstoffe, z. B. oberflächenaktive und/oder entschäumende Substanzen und/oder ein Cosolvent vorgesehen sein.

Zusätzlich zur Wasserbasis, zu den Farbpigmenten und vorzugsweise dem Polymer P kann eine grenzflächenaktive Substanz, z. B. ein Netzmittel, zur Herabsetzung der Obeflächenspannung vorgesehen sein.

Zusätzlich zur Wasserbasis, zu den Farbpigmenten, vorzugsweise dem Polymer und ggf. dem Netzmittel kann ein das Dispergieren unterstützendes und/oder stabilisierendes Dispergiermittel vorgesehen sein.

In einer oder sämtlichen vorgenannten oder nachfolgenden Ausführungen weist die trockene Druckfarbe z. B. eine nach der Bleistifthärte ermittelte Oberflächenhärte von 3H (Erichsen pencil hardness) auf, d. h. sie muss in diesem Maße ritzfest sein.

In einer oder sämtlichen vorgenannten oder nachfolgenden Ausführungen ist die Druckfarbe als schwarze Tinte ausgebildet und weist auf einem in obigem Sinne ungestrichenen und/oder unbeschichteten Papier bzw. Bedruckstoff 02 einen Wert für die nach DIN 16536 gemessene Reflexion von 1,2 bis 1,6, insbesondere 1,3 bis 1,5, auf.

In einer oder sämtlichen vorgenannten oder nachfolgenden Ausführungen weist die getrocknete Druckfarbe bei einem Winkel von 60 ° einen Glanz von < 60 %, vorzugsweise < 55 %, auf, welcher beispielsweise durch ein Reflektometer, z. B. Micro tri gloss der Fa. BYK-Gardner, entsprechend der DIN 67530 ermittelt ist.

In einer vorteilhaften Ausführung ist die Druckmaschine 01 in einer ersten Betriebssituation und/oder Ausführung mit einem ersten, in obigem Sinne ungestrichenen. Bedruckstoff 02 und einer ersten Druckfarbe und in einer zweiten Betriebssituation und/oder Ausführung mit einem zweiten - z. B. in obigem Sinne geringfügig, leicht - gestrichenen Bedruckstoff 02 und der selben oder einer zweiten Druckfarbe mit einer Pigmentierung zur Herstellung eines selben Farbtons betrieben. Für den Fall einer zweiten Druckfarbe kann sich diese jedoch durch den Gewichtsanteil des Polymers, z. B. um mindestens 5 %, insbesondere 10% des Gewichtsanteils von der ersten Druckfarbe unterscheiden. Insbesondere weist die zweite Druckfarbe einen geringeren Gewichtsanteil an der Farbmasse auf.

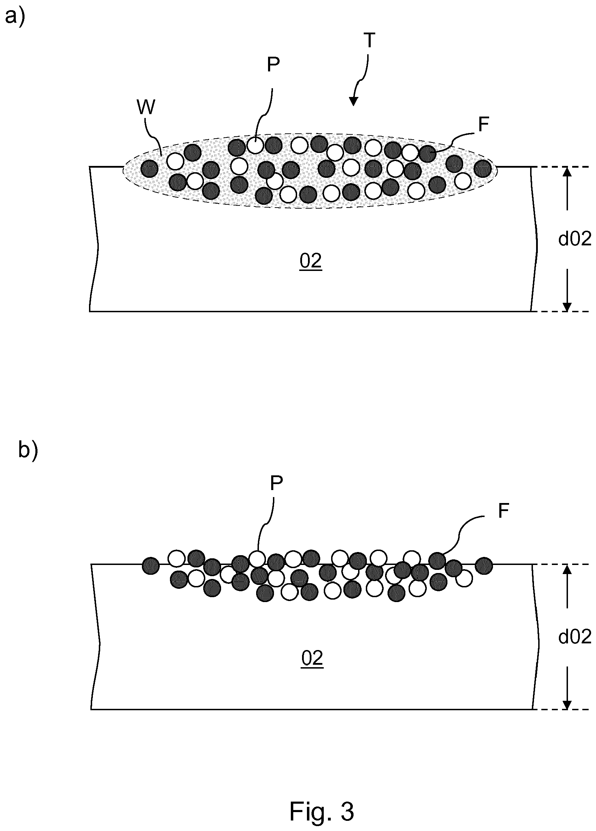

Die polymerhaltige Druckfarbe, insbesondere Inkjet-Tinte, ist von ganz besonderem Vorteil in Verbindung mit der als Tintenstrahl- oder Inkjetdruckmaschine 01 ausgebildeten Druckmaschine 01, in welcher ein o. g. Bedruckstoff 02 in Art eines Offsetpapiers bedruckt wird. Wenn der wässrige Farbtropfen, d. h. der Tintentropfen T (siehe z. B. Fig. 3), auf den Bedruckstoff 02 trifft, werden die Farbpigmente zumindest zu einem großen Teil durch die Polymere im Bereich der Bedruckstoffoberfläche gehalten. Ein Aufsaugen der Farbpigmente zusammen mit der wässrigen Phase W wird zu einem großen Teil blockiert (siehe z. B. Fig. 3 a) und b).

Die Beschaffenheit des Polymers P und dessen Massenverhältnis zu den Pigmenten P ist derart eingestellt, dass im im Wesentlichen trockenen bedruckten Bedruckstoff 02 z. B. mindestens 80 %, vorzugsweise 90 % der Pigmente eines Tintentropfens T in einer äußeren Schichtdicke des Bedruckstoffes 02 liegen, welche eine Stärke von z. B. 20 µm, vorzugsweise 10 µm, und/oder 20 %, vorzugsweise 10 % der Bedruckstoffdicke aufweist. Der im wesentlichen trockene Zustand kann einen Zustand beschreiben, in welchem sich der bedruckte Bedruckstoff 02 nach einer Verweilzeit von beispielsweise einer Stunde unter ISO-Bedingungen (Temperatur 15 °C, Druck 1,013 bar, Luftfeuchtigkeit 60 %) befindet.

In einer vorteilhaften Ausführung - insbesondere in Verbindung mit einem o. g., z. B. ersten, zweiten oder insbesondere dritten Bedruckstoff 02 und/oder in Verbindung mit einer o. g., z. B. bevorzugt ersten oder ggf. anderen Ausführung der Druckfarbe - ist die Druckmaschine 01 stromabwärts des Tintenstrahldruckkopfes 212; 412 auf dem Bedruckstoffweg mit einem mit dem Bedruckstoff 02, insbesondere mit wenigstens der ersten Bedruckstoffseite mittel- oder bevorzugt unmittelbar zusammen wirkenden Trocknungshilfsmittel 219; 419, z. B. einem oben beschriebenen Trockner 301; 331 und/oder mit einer Blaseinrichtung, mittels welcher auf die frisch bedruckte Bedruckstoffseite - insbesondere unter hohem Druck - ein Fluidstrom gerichtet werden kann, z. B. ein auf die Bedruckstoffseite gerichtetes sog. Luftschwert 219; 419 oder Luftmesser, ausgeführt. In dem dem Trockner 301; 331 und/oder der Blaseinrichtung 219; 419 stromaufwärts vorgeordneten Bedruckstoffweg ist vor und/oder nach dem mindestens einen Tintenstrahldruckkopf 212; 412 eine auf zumindest die erste Bedruckstoffseite des noch unbedruckten bzw. bereits bedruckten Bedruckstoffs 02 (bzw. auf die entsprechende Stelle im Bahnweg) gerichtete Applikationseinrichtung 217; 218; 417; 418 in Form einer eine Energie einleitenden Energiequelle 217; 417 und/oder in Form einer eine mit einer bereits auf oder im Bedruckstoff oder in der Druckfarbe enthaltenen Komponente im Kontaktfall exotherm reagierende Reaktionskomponente aufbringende Auftrageinrichtung 218; 418 vorgesehen. Es kann lediglich eine, z. B. bevorzugt die Energiequelle 217; 417 oder alternativ die Auftragvorrichtung 218; 418 oder es können gleichzeitig beide derartige Applikationseinrichtungen 217; 218; 417; 418 vorgesehen sein. Bevorzugt ist die als Energiequelle 217; 417 ausgebildete Applikationseinrichtung 217; 417 stromabwärts des Druckbereichs, d. h. des Farbauftrages, insbesondere in dem der mindestens einen Druckeinheit 200; 400 nachgeordneten Bedruckstoffweg stromaufwärtseines ersten oder einzigen im Bedruckstoffweg vorgesehenen Trocknungshilfsmittels 301; 331; 219, und die als Auftrageinrichtung 218; 418 ausgebildete Applikationseinrichtung 218; 418 stromaufwärts des Druckbereichs, d. h. des Farbauftrages, insbesondere in dem der einzigen oder ersten von der Bedruckstoffbahn 02 durchlaufenen Druckeinheiten 200; 400 vorgeordneten Bedruckstoffweg, angeordnet.

Derartig Wärme freisetzende Reaktionskomponenten können grundsätzlich jegliche Paare von bei deren Zusammenführung ihren physikalischen und/oder chemischen Zustand unter Freisetzung von Wärme ändernde Stoffe sein. Beispielsweise umfasst das Stoffepaar ein Halogen, z. B. Brom, und einen ungesättigten Kohlenwasserstoff, z. B. ein Alken, insbesondere Ethen, wobei z. B. letzteres als Bestandteil in der Druckfarbe und ersteres beispielsweise Bestandteil einer durch die Auftragvorrichtung 218; 418 aufzubringenden Flüssigkeit ist.

In der Ausführung und/oder Betriebsweise der Druckmaschine 01 mit einem aus Papier oder Karton gebildeten Bedruckstoff 02, kann stattdessen oder zusätzlich hierzu in dem dem Trockner 301; 331 und/oder dem Luftschwert 219 stromaufwärts vorgeordneten Bedruckstoffweg vor und/oder nach dem mindestens einen Tintenstrahldruckkopf 212; 412 eine Applikationseinrichtung 218; 418 in Form eines einen Initiator für eine Polymerisation von in der Druckfarbe enthaltenen Monomeren umfassenden Mittels und/oder in Form eines einen die Löslichkeit eines in der Druckfarbe enthaltenen Polymers und/oder Copolymers begünstigenden Stoff umfassendes Mittel aufbringende Auftrageinrichtung vorgesehen sein.

Als Energiequelle 217; 417 kann eine über thermischen Kontakt, z. B. Wärmeleitung und Berührkontakt zu einer Heizeinrichtung, oder bevorzugt kontaktlos Energie auf den - z. B. ersten, zweiten oder dritten - Bedruckstoff 02 übertragende Quelle, insbesondere eine Strahlungsquelle217; 417, bevorzugt eine elektromagnetische Strahlungsquelle im IR- oder NIR-, UV- oder sichtbaren Spektralbereich, z. B. in Form einer Lasereinrichtung 217; 417, oder aber eine Ultraschallquelle, vorgesehen sein. In der Ausführung als Lasereinrichtung 217; 417 kann diese beispielsweise als eine ultrakurze Laserpulse, z. B. einer Pulsdauer kleiner 1 · 10-6 s, insbesondere höchstens 1 · 10-7 s, hoher Leistungsdichte, z. B. mindestens 100 W/mm², insbesondere mindestens 400 W/mm², bezogen auf den Mittelwert über die Strahlquerschnittsfläche, ausgeführte Lasereinrichtung 217; 417 ausgebildet sein, wobei als Strahlquerschnittsfläche die innerhalb der 10%-Grenze der maximalen Intensität liegende Querschnittsfläche auf Höhe des Strahlaustrittes verstanden sein soll. Zur Erzeugung dieser Laserpulse kann die Lasereinrichtung 217; 417 als System mit Strahlauskopplung, insbesondere mit von der Strahlerzeugung unabhängiger Strahlauskopplung, ausgeführt sein. Der Laserstrahl kann über Beispielsweise eine Optik in Bedruckstoffbreite bewegt sein. Es kann eine Mehrzahl derartiger pulsierender Laser - mit stationärem oder mit quer zum Bedruckstoff oszillierendem Strahl - quer zur Bedruckstoffbreite nebeneinander in der Lasereinrichtung 219; 419 vorgesehen sein.

Als Auftrageinrichtung 218; 418 kann eine einen ionischen oder radikalischen Initiator aufbringende Applikationseinrichtung vorgesehen sein. Als ionische Flüssigkeit kann ein Fluid aufgebracht werden, welches beispielsweise in zumindest einer signifikanten Konzentration, z. B. mindestens zu einem 1,0 Gew.%, ein, beispielsweise zumindest teilweise gelöstes, Salz mit einem Schmelzpunkt kleiner 100 °C bei 1 bar Umgebungsdruck enthält. Bevorzugt handelt es sich hierbei um ein bei 21 °C und 1 bar Umgebungsdruck bereits flüssiges Satz.

Die Auftrageinrichtung 218; 418 kann als kontaktlose Sprüheinrichtung oder als kontaktbasierte Streich- oder Taucheinrichtung ausgebildet sein.

Für den Fall einer im Bedruckstoffweg vor dem mindestens einen Tintenstrahldruckkopf 212; 412 vorgesehene Applikationseinrichtung 217; 218; 417; 418 ist diese mit ihrem druckkopfnahen Wirkende z. B. höchstens um einen in einem Druckbetrieb in zwei, bevorzugt einer Sekunde zurückgelegten Weg und/oder um höchstens 1,0 m, insbesondere um höchstens 0,5 m, bevorzugt höchstens 0,2 m, beabstandet vor dem stromaufwärtigen Wirkende des oder des ersten von mehreren in Transportrichtung betrachtet versetzt und/oder hintereinander angeordneten Tintenstrahldruckköpfen 212; 412 des Druckwerks 211; 411 und/oder zwischen dem stromaufwärtigen Wirkende des oder des ersten von mehreren in Transportrichtung betrachtet versetzt und/oder hintereinander angeordneten Tintenstrahldruckköpfe 212; 412 des Druckwerks 211; 411 und einer ersten dem Druckwerk211; 214 stromaufwärts im Bahnweg vorgeordneten, zumindest teilumschlungenen Walze 203; 403 und/oder auf den Umfang eines Zentralzylinders 201; 401 gerichtet und/oder im oder am Gestell einer das Druckwerk 211; 411 angeordnet.

Für den Fall einer im Bedruckstoffweg nach dem mindestens einen Tintenstrahldruckkopf 212; 412 vorgesehene Applikationseinrichtung 217; 218; 417; 418 ist diese mit ihrem druckkopfnahen Wirkende höchstens um einen in einem Betrieb in einer Sekunde zurückgelegten Weg und/oder um höchstens 1,0 m, insbesondere um höchstens 0,5 m, bevorzugt höchstens 0,2 m, beabstandet nach dem stromabwärtigen Wirkende des oder des letzten von mehreren in Transportrichtung betrachtet versetzt und/oder hintereinander angeordneten Tintenstrahldruckköpfe 212; 412 des Druckwerks 211; 411 und/oder zwischen dem stromabwärtigen Wirkende des oder des ersten von mehreren in Transportrichtung betrachtet versetzt und/oder hintereinander angeordneten Tintenstrahldruckköpfe 212; 412 des Druckwerks 211; 214 und einer ersten dem Druckwerk211; 214 stromabwärts im Bahnweg nachgeordneten, zumindest teilumschlungenen Walze 214; 414 und/oder auf den Umfang eines Zentralzylinders 201; 401 gerichtet und/oder im oder am Gestell einer das Druckwerk 211; 411 angeordnet.

In einer - z. B. bevorzugten - Ausführung der Druckmaschine 01 - im Zusammenhang mit sämtlichen Ausführungen der Druckfarbe und/oder des Bedruckstoffs 02 - ist der Tintenstrahldruckkopf 212 des Druckwerks 211; 411 direkt auf den Bedruckstoff 02 bzw. auf den einen Zentralzylinder 201; 401 umschlingenden Bedruckstoff 02 gerichtet.

In einer ggf. hinsichtlich eine Optimierung der Medien vorteilhaften Alternative - im Zusammenhang mit sämtlichen Ausführungen der Druckfarbe und/oder des Bedruckstoffs 02 - ist Tintenstrahldruckkopf 212 des Druckwerks 211; 411 auf ein z. B. als Übertragungsband oder Übertragungszylinder ausgebildetes Übertragungsmittel gerichtet ist und die auf letzterem aufgebrachte Tinte von diesem mittel- oder unmittelbar auf den Bedruckstoff 02 übertragbar ist bzw. übertragen wird.

Das durch die Auftrageinrichtung 218; 418 aufzutragende Mittel kann einen grenzflächenaktiven Stoff, insbesondere ein Tensid, enthalten und/oder als Fluid mit einem höchstens 10 %-igem Feststoffanteil vorliegen.

Für die genannten Ausführungen weist der Tintenstrahldruckkopf (212) ein Tintenreservoir und/oder eine Leitungsverbindung zu einem Tintenreservoir mit einer als Tinte ausgebildeten wasserbasierten Druckfarbe auf, welche als Bestandteile sowohl Farbpigmente F als auch ein Polymer P umfasst und bevorzugt in einer der o. g. Ausführenden oder Ausführungsvarianten, insbesondere der ersten Ausführung, ausgebildet ist.

Das Polymer P in einer der o. g. Ausführungen behindert durch dessen Beschaffenheit und/oder dessen Massenverhältnis im Vergleich zum Anteil der Farbpigmente F ein Eindringen der Farbpigmente F zusammen mit der wässrigen Phase W in den Bedruckstoff hinein und/oder ist im noch nicht applizierten Zustand der Druckfarbe zumindest in Teilen physikalisch an Farbpigmente F angelagert und/oder gekoppelt, insbesondere umhüllt Farbpigmente F vollständig oder zumindest teilweise.

Beim Bedrucken eines Bedruckstoffes in der Druckmaschine 01 wird der-z. B. erste oder zweite oder dritte - Bedruckstoff 02 in wenigstens einer Druckeinheit 200; 400 bzw. durch wenigstens ein Druckwerk 211; 411 nach einem direkten oder indirekten Tintenstrahlverfahren mit einer als Tinte ausgebildeten Druckfarbe bedruckt und im weiteren Verlauf auf zumindest der bedruckten Seite durch ein Luftschwert 219; 419 und/oder einen Trockner 301 getrocknet. Auf dem Bedruckstoffweg vor und/oder nach dem Bedrucken, jedoch nach einer eingangs der Druckmaschine vorgesehenen Bedruckstoffquelle 100 und noch vor dem Trockner 301 und/oder dem Luftschwert 219; 419 wird über eine Applikationseinrichtung 217; 218; 417; 418 Energie in Form von Wärme- und/oder Strahlungsenergie und/oder eine mit einer bereits auf oder im Bedruckstoff oder in der Druckfarbe enthaltenen Komponente im Kontaktfall exotherm reagierende Reaktionskomponente auf den Bedruckstoff 02 aufgebracht.

Bevorzugt wird dem Bedruckstoff 02 auf dem Bedruckstoffweg nach dem Bedrucken, jedoch noch vor dem Trocknungshilfsmittel, z. B. dem Trockner 301 und/oder dem Luftschwert 219; 419, über eine Applikationseinrichtung 217; 417 Energie in Form von Wärme- und/oder Strahlungsenergie aufgebracht, ohne dass auf dem Bedruckstoffweg zwischen der eingangs der Druckmaschine vorgesehenen Bedruckstoffquelle und dem Bedrucken eine Vorbehandlung mit einem als Haftvermittler wirksamen Primer, d. h. z. B. ohne eine o. g., einen Primer auftragende Bedruckstoffvorbereitungsvorrichtung 202, erfolgt.

In einer Ausführung bzw. Betriebsweise wird durch das Druckwerk 211; 411 ein - z. B. zweiter oder dritter - Bedruckstoff 02 mit einer zu bedruckenden Oberfläche mit einer Saugfähigkeit entsprechende der Wasseraufnahme nach Cobb 60 von höchstens 70 g/m², insbesondere höchstens 60 g/m², geführt und bedruckt. In Weiterbildung wird durch das Druckwerk 211; 411 ein - z. B. dritter - Bedruckstoff 02 mit einer zu bedruckenden Oberfläche aus Kunststoff oder Metall oder Lack, insbesondere als Kunststoff- oder Metallfolie oder als Bahn oder Bogen mit lackierter oder metallischer oder Kunststoffoberfläche ausgebildeter Bedruckstoff 02 und/oder ein Bedruckstoff 02 mit einer Saugfähigkeit entsprechend einer Wasseraufnahme nach Cobb 60 von weniger als 5 g/m², insbesondere weniger als 1 g/m², geführt und bedruckt.

Es kann durch das Druckwerk 211; 411 in einer Ausführung oder Betriebsweise ein als Papier oder Karton mit einer Grammatur von 30 g/m² bis 450 g/m² Flächengewicht und/oder mit einer Rauigkeit im Bereich seiner zu bedruckenden Oberfläche nach Bendtsen von mindestens 30 ml/min und/oder höchstens 200 ml/min und/oder zwischen 30 ausgebildeter Bedruckstoff 02 geführt und bedruckt sein bzw. werden.

Insbesondere kann ein als Papier oder Karton mit einer Grammatur von 30 g/m² bis 450 g/m² Flächengewicht und/oder im Bereich seiner zu bedruckenden Oberfläche mit einer Saugfähigkeit entsprechend einer Wasseraufnahme nach Cobb 60 von höchstens 70 g/m², insbesondere höchstens 60 g/m² und/oder im Bereich seiner zu bedruckenden Oberfläche einer Rauigkeit nach Bendtsen von mindestens 30 ml/min und/oder höchstens 200 ml/min und/oder zwischen 30 ausgebildeter Bedruckstoff 02 geführt und bedruckt sein bzw. werden.

In einer Variante oder alternativen oder wahlweise durchführbaren Betriebsweise kann durch das Druckwerk 211; 411 ein Bedruckstoff 02 aus einem holzhaltigen Papier mit einem Flächengewicht zwischen 35 bis 80 g/m² und/oder mit einer zu bedruckenden Oberfläche mit einer Rauhigkeit nach Bendtsen von mindestens 30 ml/min bedruckt sein bzw. werden.

Für die genannten Betriebsweisen wird eine Druckfarbe in z. B. einer oben genannten Ausführung, insbesondere in erster Ausführung, verwendet.

In einer vorteilhaften Betriebsweise - z. B. in Verbindung mit der Druckfarbe in einer oben genannten, insbesondere der ersten Ausführung - erfolgt durch den dem Drucken nachgeordneten und bevorzugt einem Trockner 30 und/oder Luftschwert 219; 419 vorgeordneten Energieeintrag, insbesondere durch Erwärmen auf mindestens 55 °C, bevorzugt auf mindestens 60 °C, ein Aufschmelzen von in der Druckfarbe vorliegenden Polymerteilchen, insbesondere von Farbpigmente umgebenden Polymerhüllen, und/oder eine Verfilmung des Polymers und z. B. Verdrängung einer wässrigen Phase zur Oberfläche hin und/oder eine Initialisierung des Polymerisationsprozesses und/oder ein Vortrocknen der applizierten Druckfarbe.

Um ein Eindringen der Pigmente und/oder Verlaufen möglichst klein zu halten erfolgt die Applikation der Reaktionskomponente auf dem Bedruckstoffweg vor dem Bedrucken z. B. derart, dass bei im Druckbetrieb gefördertem Bedruckstoff 02 zwischen dem Ende der Applikation und dem Beginn des Bedruckens an einer selben Bedruckstoffstelle höchstens zwei Sekunden, insbesondere höchstens eine Sekunde, bevorzugt höchstens eine halbe Sekunde liegt.

Um ein Eindringen der Pigmente und/oder Verlaufen möglichst klein zu halten erfolgt die Applikation der Energie auf dem Bedruckstoffweg nach dem Bedrucken z. B. derart, dass bei im Druckbetrieb gefördertem Bedruckstoff 02 zwischen dem Ende des Bedruckens und dem Beginn des Applizierens an einer selben Bedruckstoffstelle höchstens zwei Sekunden, insbesondere höchstens eine Sekunde, bevorzugt höchstens eine halbe Sekunde liegt.

Eine Fördergeschwindigkeit kann im Druckbetrieb beispielsweise mindestens 60 m/min, vorzugsweise mindestens 120 m/min betragen.

### Bezugszeichenliste

- 01: Druckmaschine, Tintenstrahldruckmaschine, Rollen-Druckmaschine, Rollen-Tintenstrahldruckmaschine, Rollendruckmaschine,
- 02: Bedruckstoff, Bedruckstoffbahn, Papierbahn

- 100: Bedruckstoffquelle, Rollenabspulvorrichtung, Rollenwechsler
- 101: Bedruckstoffrolle
- 102: -
- 103: Rollenhaltevorrichtung, Klemmvorrichtung, Klemmdorn, Klemmkonus, Spannvorrichtung, Spanndorn, Spannkonus, Spannwelle; Rotationskörper, erster
- 104: Antriebsmotor, Elektromotor (103)

- 107: Tragarm (101)
- 108: Achse, Träger, Tragrahmen (107)
- 109: Schwenkachse (108)
- 110: -
- 111: Rotationsachse (101; 103)
- 112: Gestell
- 113: Tänzerwalze
- 114: Bahnkantenausrichter, erster
- 115: -
- 116: Ausrichtwalze
- 117: Zugpresseur
- 118: Zugwalze; Rotationskörper, zweiter
- 119: Einzugspalt
- 120: -
- 121: Tänzerhebel
- 139: Einzugwerk
- 140: -
- 141: Messwalze, Einzugmesswalze, Messeinrichtung, erste

- 146: Antriebsmotor, Zugantriebsmotor (118)

- 200: Druckeinheit, erste
- 201: Druckzentralzylinder, Zentralzylinder, erster; Rotationskörper, dritter
- 202: Bedruckstoffvorbereitungsvorrichtung, Bahnvorbereitungsvorrichtung, Beschichtungsvorrichtung, Korona-Vorrichtung, Entladungsvorrichtung, Bedruckstoffreinigungsvorrichtung, Bahnreinigungsvorrichtung, Entstaubungsvorrichtung, erste
- 203: Walze, Umlenkwalze
- 204: Zwischenraum (201; 203)
- 205: -
- 206: Zylinder, Presseur, erster
- 207: Rotationsachse (201)
- 208: Antriebsmotor, Elektromotor, Direktantrieb, Einzelantrieb, Synchronmotor
- 209: Presseurspalt, erster
- 210: -
- 211: Druckwerk, Tintenstrahldruckwerk, Ink-Jet-Druckwerk, Vierfarbendruckwerk, erstes
- 212: Druckkopf, Tintenstrahldruckkopf, erster
- 213: Düsenbalken, erster
- 214: Umlenkwalze, Messwalze, Messeinrichtung, dritte
- 215: -
- 216: Messwalze, Messeinrichtung, zweite
- 217: Applikationseinrichtung, nachgeordnet, Energiequelle
- 218: Applikationseinrichtung, vorgeordnet, Auftrageinrichtung
- 219: Trocknungshilfsmittel, Blaseinrichtung, Luftschwert
- 300: Trocknereinheit
- 301: Trocknungshilfsmittel, Trockner, Infrarotstrahlungstrockner, Strahlungstrockner, Strömungstrockner, UV-Strahlungstrockner, Heißlufttrockner, erster, Haupttrockner
- 302: Strahlungsquelle, Infrarotstrahlungsquelle
- 303: Kühleinrichtung, erste
- 304: Kühlwalze, erste; Rotationskörper, vierter
- 305: -
- 306: Kühlwalzenpresseur
- 307: Anlenkwalze, erste
- 308: Anlenkwalze, zweite
- 309: Kühlwalzenspalt, erster
- 310: -
- 311: Antriebsmotor, Kühlwalzenantriebsmotor (304), erster
- 312: Umlenkwalze

- 329: Gehäuse (300)
- 330: -
- 331: Trockner, Infrarotstrahlungstrockner, Strömungstrockner, Strahlungstrockner, Heißlufttrockner, UV-Strahlungstrockner, zweiter
- 332: -
- 333: Kühleinrichtung, zweite
- 334: Kühlwalze, zweite; Rotationskörper, sechster
- 335: -
- 336: Kühlwalzenpresseur, zweiter

- 339: Kühlwalzenspalt, zweiter
- 340: -
- 341: Antriebsmotor, Kühlwalzenantriebsmotor (334), zweiter
- 342: -
- 343: Messwalze, Messeinrichtung, sechste

- 400: Druckeinheit, zweite
- 401: Druckzentralzylinder, Zentralzylinder, zweiter; Rotationskörper, fünfter
- 402: Bedruckstoffreinigungsvorrichtung, Bahnreinigungsvorrichtung, Entstaubungsvorrichtung, zweite
- 403: Walze, Umlenkwalze
- 404: Zwischenraum (401; 403)
- 405: -
- 406: Zylinder, Presseur, zweiter
- 407: Rotationsachse (401)
- 408: Antriebsmotor, Direktantrieb, Elektromotor, Einzelantrieb, Synchronmotor
- 409: Presseurspalt, zweiter
- 410: -
- 411: Druckwerk, Tintenstrahldruckwerk, Ink-Jet-Druckwerk, Vierfarbendruckwerk, zweites
- 412: Druckkopf, Tintenstrahldruckkopf, zweiter
- 413: Düsenbalken, zweiter
- 414: Umlenkwalze, Messwalze, fünfte
- 415: -
- 416: Messwalze, Messeinrichtung, vierte
- 417: Applikationseinrichtung, nachgeordnet, Energiequelle
- 418: Applikationseinrichtung, vorgeordnet, Auftrageinrichtung
- 419: Trocknungshilfsmittel, Blaseinrichtung, Luftschwert

- 500: Nachbearbeitungsvorrichtung, Falzvorrichtung, Aufwickelvorrichtung, Bogenschneider, Planauslage
- 501: Auszugwalze, Rotationskörper, siebter
- 502: Auszugpresseur
- 503: Auszugspalt
- 504: Antriebsmotor, Auszugwalzenantrieb (501)
- 505: -

- d02: Dicke (02)
- A: Richtung, axial

- F: Farbpigment
- P: Polymer
- T: Tintentropfen
- W: wässrige Phase

## Patentansprüche

1. Rollen-Tintenstrahldruckmaschine (01) mit wenigstens einer Druckeinheit (200; 400) und mit einem als Bedruckstoffbahn (02) ausgeführtem Bedruckstoff (02), welcher durch die Druckeinheit (200; 400) geführt und/oder führbar ist und welcher in der Druckeinheit (200; 400) durch mindestens einen Tintenstrahldruckkopf (212; 412) mit einer als Tinte ausgeführten wasserbasierten Druckfarbe eines bestimmten Farbtons in einem Tintenstrahlverfahren bedruckbar ist, wobei der Tintenstrahldruckkopf (212) in der Druckeinheit (200; 400) direkt auf die Bedruckstoffbahn (02) gerichtet ist, **dadurch gekennzeichnet, dass** durch die Druckeinheit (200; 400) eine Bedruckstoffbahn (02) aus einem holzhaltigen, mindestens 2 % Gewichtsanteil an verholzten Fasern aufweisendes Papier mit einem Flächengewicht zwischen 35 bis 80 g/m² und mit einer zu bedruckenden Oberfläche mit einer Rauhigkeit nach Bendtsen von mindestens 30 ml/min geführt ist und welche zu deren Bedruckung mit dem mindestens einen Tintenstrahldruckkopf (2012; 4012) der Druckeinheit (200; 400) unmittelbar in Wechselwirkung steht, dass der Tintenstrahldruckkopf (212) ein Tintenreservoir und/oder eine Leitungsverbindung zu einem Tintenreservoir mit der als Tinte ausgebildeten wasserbasierten Druckfarbe aufweist, welche als Bestandteile sowohl Farbpigmente (F) und ein Polymer oder Copolymer umfasst, und dass der Tintenstrahldruckkopf (212) in der Druckeinheit (200; 400) direkt auf den einen Zentralzylinder (201; 401) umschlingenden Bedruckstoff (02) gerichtet ist.

2. Rollen-Tintenstrahldruckmaschine (01) nach Anspruch 1, **dadurch gekennzeichnet, dass** die Bedruckstoffbahn (02) aus ungestrichenem Zeitungsdruckpapier ausgebildet ist und/oder gänzlich unbeschichtet ausgebildet ist.

3. Rollen-Tintenstrahldruckmaschine (01) nach Anspruch 1, **dadurch gekennzeichnet, dass** die Bedruckstoffbahn (02) aus einem geringfügig oder einem leicht gestrichenen Papier mit einem Strich eines Strichgewichtes von bis zu 25 g/m² und/oder aus einem Papier ohne eine zusätzliche salzhaltige, insbesondere Calciumchlorid enthaltende Beschichtung ausgebildet ist.

4. Rollen-Tintenstrahldruckmaschine (01) nach Anspruch 1, 2 oder 3, **dadurch gekennzeichnet, dass** der Zentralzylinder (201; 401 vom Bedruckstoff (02) auf einem Umschlingungswinkel von wenigstens 180° umschlungen ist.

5. Rollen-Tintenstrahldruckmaschine (01) nach Anspruch 1, 2, 3 oder 4, **dadurch gekennzeichnet, dass** in dem der mindestens einen Druckeinheit (200; 400) nachgeordneten Bedruckstoffweg stromaufwärts eines ersten oder einzigen im Bedruckstoffweg vorgesehenen Trocknungshilfsmittels (301; 331; 219) eine Applikationseinrichtung (217; 417) zur Aufbringung von Energie vorgesehen ist.

6. Rollen-Tintenstrahldruckmaschine (01) nach Anspruch 1, 2, 3, 4 oder 5, **dadurch gekennzeichnet, dass** in dem der einzigen oder ersten von der Bedruckstoffbahn (02) durchlaufenen Druckeinheiten (200; 400) vorgeordneten Bedruckstoffweg eine Applikationseinrichtung (218; 416) zur Aufbringung eines von einer Beschichtung verschiedenen Substrates vorgesehen ist, durch welches ein Starten und/oder Beschleunigen des Polymerisationsprozesses erreichbar ist.

7. Rollen-Tintenstrahldruckmaschine (01) nach Anspruch 1, 2, 3, 4, 5 oder 6, **dadurch gekennzeichnet, dass** die Bedruckstoffbahn (02) eine Dicke (d02) von 50 bis 120 µm aufweist.

8. Rollen-Tintenstrahldruckmaschine nach Anspruch 1, 2, 3, 4, 5, 6 oder 7, **dadurch gekennzeichnet, dass** das von der Druckfarbe umfasste Polymer oder Copolymer als ein organisches oder Kohlenwasserstoff-Polymer oder -Copolymer ausgebildet ist und/oder als acrylbasierten Polymer oder-Copolymer ein Ethylen-Polymer, ein Propylen-Polymer oder ein Buten-polymers oder als eine Mischung mehrerer dieser Polymere (P) ausgebildet ist.

9. Rollen-Tintenstrahldruckmaschine nach Anspruch 1, 2, 3, 4, 5, 6, 7 oder 8, **dadurch gekennzeichnet, dass** die Druckfarbe eine Viskosität von 4,0 bis 10,0 cP und/oder eine Oberflächenspannung von 20 bis 40 mN/m und/oder eine Dichte zwischen 1,05 und 1,25 g/ml aufweist.

10. Rollen-Tintenstrahldruckmaschine nach Anspruch 1, 2, 3, 4, 5, 6, 7, 8 oder 9, **dadurch gekennzeichnet, dass** die Druckfarbe zusätzlich zur Wasserbasis (W), den Farbpigmenten (F) und dem Polymer (P) als weiteren Bestandteil ein Netzmittel und/oder ein Dispergiermittel umfasst.

11. Rollen-Tintenstrahldruckmaschine nach Anspruch 1, 2, 3, 4, 5, 6, 7, 8, 9 oder 10, **dadurch gekennzeichnet, dass** mindestens 5 % und höchstens 30 % des Gewichtsanteils der Tinte auf das Polymer und/oder mindestens 30 % des Gewichts an einen Wasseranteil und/oder 3 bis 20 % auf einen als Feststoff angegebenen Pigmentanteil entfallen.

12. Verfahren zum Bedrucken eines Bedruckstoffes in einer Rollen-Tintenstrahldruckmaschine, wobei ein Bedruckstoff (02) in wenigstens einer Druckeinheit (200; 400) nach einem direkten oder indirekten Tintenstrahlverfahren mit einer als wasserbasierte Tinte ausgebildeten Druckfarbe bedruckt wird, indem die Druckfarbe durch mindestens einen Tintenstrahldruckkopf (212; 412) direkt auf den Bedruckstoff (02) aufgebracht wird, **dadurch gekennzeichnet, dass** in der Druckeinheit (200; 400) ein Bedruckstoff (02) aus einem holzhaltigen, mindestens 2 %,Gewichtsanteil an verholzten Fasern aufweisenden Papier mit einem Flächengewicht zwischen 35 bis 80 g/m² und mit einer zu bedruckenden Oberfläche mit einer Rauhigkeit nach Bendtsen von mindestens 30 ml/min bedruckt wird, wobei der Tintenstrahldruckkopf (212) in der Druckeinheit (200; 400) direkt auf den einen Zentralzylinder (201; 401) umschlingenden Bedruckstoff (02) gerichtet ist, und dass der Bedruckstoff (02) mit der als wasserbasierte Tinte ausgeführten Druckfarbe bedruckt wird, welche als Bestandteile sowohl Farbpigmente (F) als auch ein Polymer umfasst.

13. Verfahren nach Anspruch 12, **dadurch gekennzeichnet, dass** der Bedruckstoff (02) mit einer als Tinte ausgeführten wasserbasierte Druckfarbe bedruckt wird, welche als Bestandteile sowohl Farbpigmente (F) als auch ein Polymer umfasst.

14. Verfahren nach Anspruch 12 oder 13, **dadurch gekennzeichnet, dass** der Bedruckstoff (02) durch eine Rollen-Tintenstrahldruckmaschine gemäß einem oder mehreren der Ansprüche 8 bis 11 mit einer Druckfarbe bedruckt wird, welche wasserbasiert ausgebildet ist und in der wässrigen Phase Farbpigmente (F) sowie ein Polymer (P) umfasst, durch dessen Beschaffenheit und/oder dessen Massenverhältnis im Vergleich zum Anteil der Farbpigmente (F) ein Eindringen der Farbpigmente (F) zusammen mit der wässrigen Phase (W) in den Bedruckstoff hinein behindert wird.

15. Verfahren nach Anspruch 12, 13 oder 14, **dadurch gekennzeichnet, dass** in einer ersten Betriebssituation ein erster, ungestrichener Bedruckstoff (02) mit einer ersten Druckfarbe und in einer zweiten Betriebssituation ein zweiter, geringfügig oder leicht gestrichenen Bedruckstoff (02) mit einer zweiten Druckfarbe bedruckt wird, wobei die erste und die zweite Druckfarbe jeweils eine Pigmentierung zur Herstellung eines im wesentlichen selben Farbtons umfassen, sich jedoch durch einen voneinander verschiedenen Gewichtsanteil des Polymers (P) unterscheiden.

16. Verfahren nach Anspruch 12, 13, 14 oder 15, **gekennzeichnet durch** das Bedrucken des Bedruckstoffes (02) mit der Druckfarbe mittels einer Rollen-Tintenstrahldruckmaschine gemäß einem oder mehreren der Ansprüche 1, 2, 3, 4, 5, 6, 8, 9, 10 oder 11 erfolgt.

## Claims

1. Roller inkjet printing machine (01) with at least one print unit (200; 400) and one print substrate (02), which is implemented as printing substrate web (02) and is run and/or can be run by the print unit (200; 400) and which can be printed in the print unit (200; 400) in an inkjet printing process by at least one inkjet print head (212; 412) with printing ink of a certain shade prepared as water-based ink, wherein the inkjet print head (212) in the print unit (200; 400) points directly to the printing substrate web (02), **characterized in that** a printing substrate web (02), consisting of wood-containing printing paper with surface weight between 35 and 80 g/m2 with at least 2 % weight proportion of groundwood fibres and with surface being printed with Bendtsen roughness level of at least 30 ml/min, is led through the print unit (200; 400) and which, for the purpose of its printing, is directly in interaction with the at least one inkjet print head (2012; 4012) of the print unit (200; 400), **in that** the inkjet print head (212) has an ink feed reservoir and/or a line connection to an ink feed reservoir with water-based printing ink prepared in the form of an ink, which has as components both colour pigments (F) and a polymer or copolymer, and that the inkjet print head (212) in the print unit (200; 400) points directly to the print substrate (02) wrapped on a central cylinder (201; 401).

2. Roller inkjet printing machine (01) according to Claim 1, **characterized in that** the printing substrate web (02) is prepared from uncoated newsprint paper and/or is completely uncoated.

3. Roller inkjet printing machine (01) according to Claim 1, **characterized in that** the printing substrate web (02) is built from slightly or lightly coated paper with a coating with coating weight of up to 25 g/m2 and/or from paper without an additional saline coating, in particular containing calcium chloride.

4. Roller inkjet printing machine (01) according to Claim 1, 2 or 3, **characterized in that** the central cylinder (201; 401) is wrapped by the print substrate (02) at a wrap angle of at least 180°.

5. Roller inkjet printing machine (01) according to Claim 1, 2, 3 or 4, **characterized in that** an application device (217; 417) for energy supply is provided in the printing substrate path downstream to the at least one print unit (200; 400) upstream to a first or a single drying assistant (301; 331; 219) provided in the printing substrate path.

6. Roller inkjet printing machine (01) according to Claim 1, 2, 3, 4 or 5, **characterized in that** in the printing substrate path upstream to the single or the first of the print units (200; 400) traversed by the printing substrate web (02) an application device (218; 416) for the application of a substrate that is different from a coating is provided, through which the starting and/or the acceleration of the polymerization process can be achieved.

7. Roller inkjet printing machine (01) according to Claim 1, 2, 3, 4, 5 or 6, **characterized in that** the printing substrate web (02) has a thickness (d02) from 50 to 120 µm.

8. Roller inkjet printing machine according to Claim 1, 2, 3, 4, 5, 6 or 7, **characterized in that** the polymer or the copolymer enveloped by the printing ink is built as organic or hydrocarbon polymer or copolymer and/or is built as acryl-based polymer or copolymer, ethylene polymer, propylene polymer or butene polymers, or as a mixture of several of these polymers (P).

9. Roller inkjet printing machine according to Claim 1, 2, 3, 4, 5, 6, 7 or 8, **characterized in that** the printing ink has viscosity of 4.0 to 10.0 cP and/or surface tension of 20 to 40 mN/m and/or thickness between 1.05 and 1.25 g/ml.

10. Roller inkjet printing machine according to Claim 1, 2, 3, 4, 5, 6, 7, 8 or 9, **characterized in that** the printing ink comprises, in addition to the water base (W), the colour pigments (F) and the polymer (P), also a wetting agent and/or a dispersing agent, as additional components.

11. Roller inkjet printing machine according to Claim 1, 2, 3, 4, 5, 6, 7, 8, 9 or 10, **characterized in that** at least 5 % and maximum 30 % of the weight proportion of the ink correspond to the polymer and/or at least 30 % of the weight correspond to a water content and/or 3 to 20 % to a pigment amount given as a solid.

12. Method for printing on a print substrate in a roller inkjet printing machine, wherein a print substrate (02) is printed in the course of a direct or indirect inkjet printing process in at least one print unit (200; 400) with printing ink prepared as water-based ink, while the printing ink is applied through at least one inkjet print head (212; 412) directly on the print substrate (02), **characterized in that** a print substrate (02) from a wood-containing paper having at least 2 % weight proportion of groundwood fibres with surface weight between 35 to 80 g/m2 and with a printed surface with Bendtsen roughness level of at least 30 ml/min is printed in the print unit (200; 400), wherein the inkjet print head (212) in the print unit (200; 400) is pointing directly to a print substrate (02) wrapped on a central cylinder (201; 401), and that the print substrate (02) is printed with the printing ink prepared as water-based ink, which comprises both colour pigments (F) and a polymer as components.

13. Method according to Claim 12, **characterized in that** the print substrate (02) is printed with printing ink prepared as water-based ink, which comprises both colour pigments (F) and a polymer.

14. Method according to Claim 12 or 13, **characterized in that** the print substrate (02) is printed by a roller inkjet printing machine according to one or several of the claims 8 to 11 with printing ink, which is water-based prepared and comprises in the aqueous phase colour pigments (F) and a polymer (P), whose presence and/or their mass ratio, compared to the portion of the colour pigments (F), prevents any penetration of the colour pigments (F) together with the aqueous phase (W) into the print substrate.

15. Method according to Claim 12, 13 or 14, **characterized in that** in a first operating situation a first, uncoated print substrate (02) is printed with a first printing ink, and in a second operating situation a second, slightly or lightly coated print substrate (02) is printed with a second printing ink, wherein the first and the second printing ink, respectively, provide a pigmentation for producing a colour shade that is essentially the same, but they differ from each other in the different weight proportion of the polymer (P).

16. Method according to Claim 12, 13, 14 or 15, **characterized in that** the printing of the print substrate (02) with the printing ink by means of a roller inkjet printing machine takes place according to one or several of the claims 1, 2, 3, 4, 5, 6, 8, 9, 10 or 11.

## Revendications

1. Machine d'impression à jet d'encre à rouleau (01) comprenant au moins une unité d'impression (200 ; 400) et un matériau à imprimer (02) se présentant sous la forme d'une bande de matériau à imprimer (02), lequel est guidé et/ou peut être guidé par l'unité d'impression (200 ; 400) et lequel peut être imprimé dans l'unité d'impression (200 ; 400) par au moins une tête d'impression à jet d'encre (212 ; 412) avec une couleur d'impression à base d'eau d'une nuance déterminée, se présentant sous la forme d'encre, selon un procédé à jet d'encre, dans laquelle la tête d'impression à jet d'encre (212) dans l'unité d'impression (200 ; 400) est dirigée directement sur la bande de matériau à imprimer (02), **caractérisée en ce qu'**une bande de matériau à imprimer (02), constituée d'un papier contenant du bois, présentant un grammage compris entre 35 et 80 g/m², comportant au moins 2 % en poids de fibres ligneuses et possédant une surface à imprimer d'une rugosité Bendtsen d'au moins 30 ml/min, est guidée à travers l'unité d'impression (200 ; 400) et est en interaction directe avec ladite au moins une tête d'impression à jet d'encre (2012 ; 4012) de l'unité d'impression (200 ; 400) afin d'imprimer ladite bande, **en ce que** la tête d'impression à jet d'encre (212) comporte un réservoir d'encre et/ou un conduit de liaison menant à un réservoir d'encre comportant une couleur d'impression à base d'eau se présentant sous la forme d'une encre, qui comporte comme ingrédients aussi bien des pigments de couleur (F) qu'un polymère ou un copolymère, et **en ce que** la tête d'impression à jet d'encre (212) dans l'unité d'impression (200 ; 400) est dirigée directement sur le matériau à imprimer (02) enlaçant un cylindre central (201 ; 401).

2. Machine d'impression à jet d'encre à rouleau (01) selon la revendication 1, **caractérisée en ce que** la bande de matériau à imprimer (02) se présente sous la forme de papier journal non couché et/ou n'est pas du tout revêtue.

3. Machine d'impression à jet d'encre à rouleau (01) selon la revendication 1, **caractérisée en ce que** la bande de matériau à imprimer (02) est réalisée à partir d'un papier légèrement ou peu couché présentant une couche d'un poids de couchage allant jusqu'à 25 g/m² et/ou d'un papier exempt de revêtement supplémentaire salin, contenant en particulier du chlorure de calcium.

4. Machine d'impression à jet d'encre à rouleau (01) selon la revendication 1, 2 ou 3, **caractérisée en ce que** le cylindre central (201 ; 401) est enlacé par le matériau à imprimer (02) selon un angle d'enlacement d'au moins 180°.

5. Machine d'impression à jet d'encre à rouleau (01) selon la revendication 1, 2, 3 ou 4, **caractérisée en ce qu'**un dispositif d'application (217 ; 417) servant à appliquer de l'énergie est prévu dans le trajet de matériau à imprimer monté en aval de ladite au moins une unité d'impression (200 ; 400) en amont d'un premier ou d'un seul moyen auxiliaire de séchage (301 ; 331 ; 219) prévu dans le trajet du matériau à imprimer.

6. Machine d'impression à jet d'encre à rouleau (01) selon la revendication 1, 2, 3, 4 ou 5, **caractérisée en ce qu'**un dispositif d'application (218; 416) servant à appliquer un substrat différent d'un revêtement est prévu dans le trajet du matériau à imprimer monté en amont des seules ou premières unités d'impression (200 ; 400) parcourues par la bande de matériau à imprimer (02), substrat au moyen duquel un démarrage et/ou un ralentissement du processus de polymérisation peut être obtenu.

7. Machine d'impression à jet d'encre à rouleau (01) selon la revendication 1, 2, 3, 4, 5 ou 6, **caractérisée en ce que** la bande de matériau à imprimer (02) présente une épaisseur (d02) de 50 à 120 µm.

8. Machine d'impression à jet d'encre à rouleau selon la revendication 1, 2, 3, 4, 5, 6 ou 7, **caractérisée en ce que** le polymère ou le copolymère contenu par la couleur d'impression se présente sous la forme d'un polymère ou copolymère organique ou hydrocarbure et/ou se présente sous la forme d'un polymère ou copolymère à base d'acrylique, d'un polymère d'éthylène, d'un polymère de propylène ou d'un polymère de butène ou d'un mélange de plusieurs de ces polymères (P).

9. Machine d'impression à jet d'encre à rouleau selon la revendication 1, 2, 3, 4, 5, 6, 7 ou 8, **caractérisée en ce que** la couleur d'impression présente une viscosité de 4,0 à 10,0 cP et/ou une tension superficielle de 20 à 40 mN/m et/ou une densité comprise entre 1,05 et 1,25 g/ml.

10. Machine d'impression à jet d'encre à rouleau selon la revendication 1, 2, 3, 4, 5, 6, 7, 8 ou 9, **caractérisée en ce que** la couleur d'impression comprend comme autre ingrédient, en plus de la base d'eau (W), des pigments de couleur (F) et du polymère (P), un agent mouillant et/ou un agent dispersant.

11. Machine d'impression à jet d'encre à rouleau selon la revendication 1, 2, 3, 4, 5, 6, 7, 8, 9 ou 10, **caractérisée en ce qu'**au moins 5 % et au plus 30 % de la part en poids de l'encre correspondent au polymère et/ou au moins 30 % du poids correspondent à une part d'eau et/ou 3 à 20 % correspondent à une part de pigment exprimée en matière solide.

12. Procédé d'impression d'un matériau à imprimer dans une machine d'impression à jet d'encre à rouleau, dans lequel un matériau à imprimer (02) est imprimé dans au moins une unité d'impression (200 ; 400) selon un procédé à jet d'encre direct ou indirect avec une couleur d'impression se présentant sous la forme d'une encre à base d'eau, dans lequel la couleur d'impression est appliquée directement sur le matériau à imprimer (02) au moyen d'au moins une tête d'impression à jet d'encre (212 ; 412), **caractérisé en ce qu'**une bande de matériau à imprimer (02), constituée d'un papier contenant du bois présentant un grammage compris entre 35 et 80 g/m² et comportant au moins 2 % en poids de fibres ligneuses et possédant une surface à imprimer d'une rugosité Bendtsen d'au moins 30 ml/min, est guidée dans l'unité d'impression (200 ; 400), dans lequel la tête d'impression à jet d'encre (212) dans l'unité d'impression (200 ; 400) est dirigée directement sur le matériau à imprimer (02) enlaçant un cylindre central (201 ; 401) et **en ce que** le matériau à imprimer est imprimé avec la couleur d'impression se présentant sous la forme d'une encre, qui comporte comme ingrédients aussi bien des pigments de couleur (F) qu'un polymère.

13. Procédé selon la revendication 12, **caractérisé en ce que** le matériau à imprimer (02) est imprimé avec une couleur d'impression à base d'eau qui se présente sous la forme d'une encre et qui comporte comme ingrédients aussi bien des pigments de couleur (F) qu'un polymère.

14. Procédé selon la revendication 12 ou 13, **caractérisé en ce que** le matériau à imprimer (02) est imprimé par une machine d'impression à jet d'encre à rouleau selon l'une ou plusieurs des revendications 8 à 11 avec une couleur d'impression qui est à base d'eau et qui comporte en phase aqueuse des pigments de couleur (F) ainsi qu'un polymère (P) dont la nature et/ou dont le rapport massique, en comparaison de la part des pigments de couleur (F), empêche les pigments de couleur (F), conjointement avec la phase aqueuse (W), de pénétrer à l'intérieur du matériau à imprimer.

15. Procédé selon la revendication 12, 13 ou 14, **caractérisé en ce que**, dans une première situation de fonctionnement, un premier matériau à imprimer (02) non couché est imprimé avec une première couleur d'impression et, dans une deuxième situation de fonctionnement, un deuxième matériau à imprimer (02), peu ou légèrement couché, est imprimé avec une deuxième couleur d'impression, dans lequel la première et la deuxième couleur d'impression comportent chacune une pigmentation pour l'obtention d'une nuance sensiblement identique, mais se distinguent cependant par une part en poids du polymère (P) différente l'une de l'autre.

16. Procédé selon la revendication 12, 13, 14 ou 15, **caractérisé par** l'impression du matériau à imprimer (02) avec la couleur d'impression au moyen d'une machine d'impression à jet d'encre à rouleau selon l'une ou plusieurs des revendications 1, 2, 3, 4, 5, 6, 8, 9, 10 ou 11.
